# NEUE EUROPÄISCHE PATENTSCHRIFT

(11) **EP 1 548 313 B2**
(45) Veröffentlichungstag und Bekanntmachung des Hinweises auf die Entscheidung über den Einspruch: **28.09.2016**
(45) Hinweis auf die Patenterteilung: 03.07.2013
(21) Anmeldenummer: 04029777.2
(22) Anmeldetag: 16.12.2004
(51) Int. Cl.: F16D 25/10, F16D 48/02

(54) **Drehmomentübertragungseinrichtung**
Torque transmission device and drive train comprising such a device
Dispositif de transmission de couple et train d'entraînement le comprenant

(30) Priorität: 23.12.2003 DE 10361491
(43) Veröffentlichungstag der Anmeldung: 29.06.2005
(73) Patentinhaber: Schaeffler Technologies AG & Co. KG, 91074 Herzogenaurach (DE)
(72) Erfinder: Agner, Ivo, 77815 Bühl (DE); Reik, Wolfgang, Dr., 77815 Bühl (DE); Werner, Olaf, Dr., 77815 Bühl (DE)

(56) Entgegenhaltungen:
- EP-A2- 1 134 447
- EP-A2- 1 174 631
- EP-A2- 1 203 899
- WO-A1-03//102438
- DE-A1- 2 904 666
- DE-A1- 3 005 657
- DE-A1- 3 202 179
- DE-A1- 3 400 732
- DE-A1- 4 134 369
- DE-A1- 4 139 611
- DE-A1- 10 034 730
- DE-A1- 10 146 837
- DE-A1- 10 155 050
- DE-A1- 10 155 458
- DE-A1- 10 205 177
- DE-A1- 10 227 313
- DE-A1- 10 238 118
- DE-A1- 10 301 405
- DE-A1- 10 316 419
- DE-A1- 10 316 445
- DE-A1- 19 923 851
- DE-C1- 19 710 379
- DE-C1- 19 750 675
- DE-U1- 29 720 446
- US-A- 2 485 688
- US-A- 2 775 330

## Beschreibung

Die Erfindung betrifft eine Drehmomentübertragungseinrichtung nach dem Oberbegriff des Anspruchs 1, vgl, DE-A-101 55 458.

Doppelkupplungsgetriebe mit zwei Getriebeeingangswellen, bei denen Drehmomentübertragungseinrichtungen mit jeweils einer Nasskupplung für jede Getriebeeingangswelle vorgesehen sind, wobei die Nasskupplungen mittels entsprechender Kolbeneinheiten hydrostatisch betätigt werden und der hierfür notwendige Druck sowie gegebenenfalls der Druck zur Kühlung der Kupplungen im Bedarfsfall von einer Druckmittelpumpe generiert wird, sind bekannt. Derartige Pumpen haben hohe Leistungen und verbrauchen entsprechen viel Energie. Zwischen der Pumpe und den Kolbeneinheiten sind zum Aufbau eines von der Pumpe mittels eines Druckmittels erzeugten Drucks zur Betätigung der Kupplungen Drehdurchführungen mit Dichtungen vorgesehen, die zwischen drehenden und stehenden Bauteilen abdichten. Entsprechende Vorkehrungen zur Standzeit dieser Dichtungen müssen getroffen werden.

Aufgabe der Erfindung ist die Verbesserung einer Drehmomentübertragungseinrichtung und insbesondere eines Antriebsstrang dahingehend, dass über die Kupplungen der beiden Getriebeeingangswellen bei geringem Energieverbrauch ein hohe Leistung der Brennkraftmaschine übertragen werden kann und gleichzeitig eine einfache und sichere Bedienung der Kupplungen bei hoher Übertragungsleistung und langer Standzeit möglich ist. Außerdem sollen die Herstellungskosten gering und die Fertigung und Montage einfach sein.

Die Aufgabe wird durch eine Drehmomentübertragungseinrichtung gemäß Anspruch 1 gelöst.
- Die Reibeinheiten der beiden Reibungskupplungen sind bevorzugt radial übereinander angeordnet, können jedoch bei entsprechend ausgestalteten Bauräumen des Antriebsstrangs axial voneinander beabstandet auf gleichem oder unterschiedlichem Durchmesser angeordnet sein. Um eine gleichmäßige Übertragungsleistung der beiden Reibungskupplungen vorzusehen, können die beiden Reibungskupplungen bezüglich ihrer Reibleistung aufeinander abgestimmt sein, beispielsweise können die ringförmigen Reibpartner der radial äußeren Reibungskupplungen eine kleiner Differenz zwischen Innen- und Außendurchmesser aufweisen und/oder die Reibeinheit der radial äußeren Reibungskupplung kann weniger Reibelemente aufweisen. Die Wahl unterschiedlicher Reibmaterialien kann ebenfalls von Vorteil sein.
- Die Reibeinheiten jeweils einer Reibungskupplung werden mittels eines der jeweiligen Reibeinheit zugeordneten Betätigungsteils entgegen eines Anschlags beaufschlagt. Als Betätigungsteil kann ein Scheiben- oder Hebelteil vorgesehen sein, das mit einem drehenden, axial festen Teil der Kupplung befestigt und gegenüber diesem verschwenkbar sein kann und bei axialer Beaufschlagung die antriebsseitigen und abtriebsseitigen Reibpartner gegen einen Anschlag verpresst, so dass die Reibungskupplung zuerst schlupft und danach haftet. Es kann vorteilhaft sein, die Reibungskupplung nur soweit zu verpressen, das heißt zu schließen, bis das gewünschte Drehmoment von der Brennkraftmaschine auf die entsprechende Getriebeeingangswelle übertragen wird.
- mit dem Betätigungsteil jeder Reibungskupplung ist unter Zwischenschaltung eines Betätigungslagers jeweils eine drehfest mit einem feststehenden Gehäuseteil verbundene, axial auf das jeweilige Betätigungsteil einwirkende Betätigungsvorrichtung angeordnet, beide Reibungskupplungen werden in nasser Betriebsweise betrieben. Auf diese Weise kann ein Betätigungssystem ohne Drehdurchführungen vorgeschlagen werden, da der hydraulische Wirkzusammenhang Druckversorgungseinrichtung / Leitung stehend / Leitung drehend / Druckkolben zur Beaufschlagung der Kupplung - wie aus Doppelkupplungen des Stands der Technik - mittels eines mechanischen Betätigungslagers zur Drehentkopplung von Betätigungsvorrichtung und Kupplung umgangen werden kann. Auf diese Weise steht auch ein Drehmomentübertragungssystem zur Verfügung, dessen Reibungskupplungen unabhängig von der Betätigung des Doppelkupplungsgetriebes - hydraulisch, pneumatisch, mittels elektrischer Aktorik oder deren Kombinationen - mit dem geeigneten Betätigungssystem ausgestattet werden kann.

Die Nehmereinheit kann mehrere, über den Umfang verteilte, um zumindest eine Getriebeeingangswelle angeordnete Untereinheiten zur Beaufschlagung eines Betätigungslagers aufweisen, wobei zur Beaufschlagung beider Reibungskupplungen beide Nehmereinheiten über den Umfang verteilte Untereinheiten aufweisen und diese über den Umfang abwechselnd verteilt und auf annähernd gleichem Umfang angeordnet sein können. Alternativ kann eine Nehmereinheit für eine Reibungskupplung aus einem druckbeaufschlagbaren Ringzylinder mit darin axial verlagerbarem Ringkolben sein, wobei zwei radial übereinander angeordneten Nehmereinheiten jeweils eine Reibungskupplung betätigen können. Besonders vorteilhaft kann eine Anordnung sein, bei der ein äußerer Ringkolben direkt axial verlagerbar auf einem radial inneren Ringkolben dichtend gelagert ist, wobei für beide Kolben ein separater Druckraum vorgesehen ist, so dass beide Kupplungen unabhängig voneinander betätigbar sind.

Insbesondere für Antriebsstränge mit einem hydraulisch betätigten Doppelkupplungsgetriebe mit einer Pumpe und einem Steuerteil zum Steuern der hydraulischen Bauelemente der Schaltung kann es vorteilhaft sein, Nehmereinheiten zur Beaufschlagen der Betätigungslager direkt in einer Wandung des Getriebegehäuses aufzunehmen, wobei diese von dem Steuerteil gesteuert mit Druck der Pumpe versorgt werden und die Kupplungen betätigen. Es kann vorteilhaft sein, eine derartige Anordnung auf für Einfachkupplung in Verbindung mit einem hydraulisch gesteuerten Automatikgetriebe wie einem automatisierten Schaltgetriebe (ASG) oder einem stufenlosen Automatikgetriebe (CVT) zu verwenden. Dabei kann eine Kolben-/Zylindereinheit in der Wandung des Getriebes und/oder im entsprechenden Steuerteil aufgenommen sein oder zumindest ein Kolben kann in einem in der Gehäusewandung oder dem Steuerteil eingearbeiteten Zylinder axial verlagerbar eingebracht sein.

Ein weiteres Ausgestaltungsbeispiel kann eine elektromechanische Betätigungsvorrichtung vorsehen, wobei die Beaufschlagung zumindest einer Reibungskupplung mittels eines im wesentlichen senkrecht zu einer der Getriebeeingangswellen angeordneten elektromotorischen Drehantriebes erfolgt, wobei die rotatorische Bewegung mittels eines Getriebes in eine translatorische Bewegung entlang einer der Getriebeeingangswellen zur Beaufschlagung des entsprechenden Betätigungslagers gewandelt wird. Alternativ hierzu kann die Beaufschlagung zumindest einer Reibungskupplung mittels eines im wesentlichen parallel oder konzentrisch zu einer der Getriebeeingangswelle angeordneten elektromotorischen Drehantriebes erfolgen, wobei die rotatorische Bewegung mittels eines Getriebes in eine translatorische entlang dieser Getriebeeingangswelle zur Beaufschlagung des entsprechenden Betätigungslagers gewandelt wird. Hierzu sei beispielsweise die deutsche Patentoffenlegung DE 100 33 649 A1 genannt.

Es versteht sich, dass die beiden im Nassbetrieb betriebenen Reibungskupplungen in speziellen Einsätzen zwangsweise geschlossene Kupplungen sein können die unter Anwendung einer Axialkraft ausgerückt werden. In Standardeinsätzen sind diese Reibungskupplungen jedoch zugedrückte Kupplungen, das heißt, sie sind im nicht von der Betätigungsvorrichtung beaufschlagten Zustand ausgerückt und werden durch Beaufschlagen mit einer Axialkraft eingerückt.

Besonders vorteilhaft ist die Betätigung der nass betriebenen Kupplungen mit einer von der Drehrehzahl der Brennkraftmaschine unabhängigen Betätigungseinrichtung der vorgeschlagenen Ausführungen in Verbindung mit einer so genannten Start-Stopp-Einrichtung, bei der während eines Stands des Fahrzeugs oder bei Bergabfahrten die Brennkraftmaschine stillgelegt wird und bei einer Lastanforderung, beispielsweise durch das Gaspedal, die Brennkraftmaschine gestartet wird und mit zumindest einer Kupplung angefahren beziehungsweise die Fahrt fortgesetzt werden soll. Während bei mittels einer Pumpe betätigten Kupplungen diese vom vollständig ausgerückten Zustand nach dem Starten der Brennkraftmaschine und dem nachfolgenden Druckaufbau durch die Pumpe von dieser Stellung wieder zum Greifpunkt bewegt werden müssen und dann erst Reibmoment auf das Getriebe übertragen werden kann, erfolgt ein derartiger Vorgang bei den erfindungsgemäßen Betätigungseinrichtungen schneller, da mittels unabhängig vom Betriebszustand der Brennkraftmaschine zumindest eine Kupplung am Greifpunkt gehalten werden kann und nach Starten der Brennkraftmaschine unverzüglich ein über diese Kupplung auf das Getriebe übertragbares Moment zur Verfügung steht.

Zur Kühlung zumindest einer der Reibungskupplungen, insbesondere wenn eine große Reibungswärme infolge Schlupf entsteht, kann es vorteilhaft sein, einen Kühlmittelstrom zur Kühlung zumindest einer Reibungskupplung mittels einer Pumpe bereit zu stellen. Zu einer weitgehend vom Getriebe unabhängigen Betriebsweise kann diese Pumpe im Bereich einer zwischen einer Wandung der Brennkraftmaschine und einer Wandung des Doppelkupplungsgetriebes gebildeten Kupplungsglocke angeordnet sein. Dabei kann ein Kühlmittelstrom aus einem mit dem Getriebe gemeinsamen Ölsumpf oder aus dem Getriebe selbst mittels der Pumpe angesaugt oder ein für die Reibungskupplungen getrennter Ölkreislauf vorgesehen sein. Es kann weiterhin vorteilhaft sein, die Pumpe insbesondere wenn keine hydraulische Pumpe zur Steuerung des Getriebes vorhanden ist, in ihrer Leistung so auszulegen, dass die Bereitstellung des Kühl-mittelstroms möglich ist. Die Pumpe kann von der Kurbelwelle oder einem mit dieser verbundenen Bauteil angetrieben sein. Beispielsweise kann bei einer Anordnung der Pumpe an dem Getriebegehäuse ein Kupplungsbauteil in der Nähe des Getriebes mit der Pumpe verzahnt werden. In vorteilhafter Weise handelt es sich dabei um ein mit dem Lamellenträger verbundenes Bauteil, das mittels eines Zahnrads das Hohlrad einer radial weiter außen angeordneten Innenzahnradpumpe antreibt, wobei die Innenzahnradpumpe vorteilhafterweise in einem Bauraum sparenden Bereich, beispielsweise zwischen zwei Getriebeaugen des Getriebes angeordnet ist. Dabei kann die Pumpe an einer Gehäusewandung des Getriebes angeordnet sein und zwar abhängig vom jeweiligen Getriebekonzept im Bauraum der Kupplungsglocke oder im Bauraum des Getriebes. Auch eine Integration in die Gehäusewand oder bei einem gemeinsamen Bauraum mit dem Getriebe in einer entsprechenden Halterung des gemeinsamen Bauraums kann vorteilhaft sein.
Es versteht sich, dass die Pumpe auch elektrisch angetrieben sein kann. Der Antrieb durch die Kurbelwelle oder einen Elektromotor kann mittels einer Zahnradverbindung, einem Riemenantrieb, eines Kettenantriebs oder dergleichen erfolgen.

Die Innenzahnradpumpe kann mittels eines Hohlrads mit einer Innenverzahnung angetrieben sein, wobei diese Innenverzahnung mit einer Außenverzahnung eines Sonnenrads kämmt und wobei zum Ansaugen des Kühlmittels eine Saugsichel vorgesehen ist. In vorteilhafter Weise kann das Sonnenrad mittels seiner Außenverzahnung an einem zu diesem komplementären Segment der Saugsichel radial gelagert sein, so dass eine separate Lagerung des Sonnenrads entfallen kann. Wahlweise kann auch die Verwendung einer Gerotorpumpe vorteilhaft sein. Zur Minimierung des Energiebedarfs der Pumpe kann deren Volumenstrom mittels einer Saugdrosselung geregelt werden, wobei die Saugdrosselung mittels eines Elektromagnetventils erfolgen kann. Auf diese Weise kann ein Volumenstrom beispielsweise bis zu einer vorgegebenen Drehzahl der Antriebsdrehzahl proportional sein und ab einer Grenzdrehzahl auf einem konstanten Wert gehalten werden. Erfahrungswerte haben gezeigt, dass eine Begrenzung des Kühlmitteldrucks auf 5 bar, vorzugsweise 3 bar und ein Volumenstrom von maximal 36 l/min, vorzugsweise 24 l/min vorteilhaft sein kann. In vorteilhafter Weise kann ein zwischen Pumpe und den Reibeinheiten der Reibungskupplungen ein Ölkühler geschaltet sein. Das Kühlmittel kann durch eine entsprechende Öffnung in der Kammer in den Sumpf entweichen, wobei es vorteilhaft sein kann, infolge Fliehkrafteinflusses nach radial außen gedrängtes Kühlmittel mit einem gehäusefest angebrachten Schöpfrohr aufzufangen und in den Sumpf zu leiten. Ein derartiges Schöpfrohr kann vorteilhafterweise zu einer Baueinheit mit anderen Funktionselementen, beispielsweise einer Nehmereinheit kombiniert werden.
Es versteht sich, dass für spezielle Anwendungen auch andere Pumpen wie Radialkolbenpumpen, Flügelzellenpumpen, Membranpumpen und dergleichen vorteilhaft sein können.

Nach dem erfinderischen Gedanken kann die gesamte Kupplungsglocke mit Kühl- bzw. Druckmittel, beispielsweise handelsübliches ATF, gefüllt sein, auch kann ein mit dem Getriebe gemeinsamer Bauraum vorgesehen sein. Besonders vorteilhaft ist es jedoch, wenn in der Kupplungsglocke zwischen einer Wandung der Brennkraftmaschine und einer Wandung des Doppelkupplungsgetriebes eine separate, gegen die Kupplungsglocke flüssigkeitsdicht abgedichtete Kammer gebildet ist, in der zumindest die beiden Reibungskupplungen aufgenommen sind. Diese Kammer kann von einem beide Reibungskupplungen umgreifenden Bauteil, beispielsweise einem topfförmigen Eingangsteil wie Lamellenträger, gebildet werden, wobei ein mit diesem verbundenes Teil auf einem feststehenden Teil wie beispielsweise einem Bauteil der Betätigungsvorrichtung oder des Getriebegehäuses dichtend und drehbar gelagert sein kann. Alternativ hierzu kann zur Bildung der Kammer ein Scheibenteil mit dem Getriebegehäuse fest verbunden sein und verdrehbar und flüssigkeitsdicht auf einem drehenden Teil, wie beispielsweise auf der Nabe des Eingangsteils sein.

Die erfindungsgemäße Anordnung der beiden Reibungskupplungen kann als Baueinheit ausgestaltet sein, die direkt auf der Kurbelwelle aufgenommen ist. Dabei kann das Betätigungssystem ebenfalls direkt an dieser Einheit angeordnet sein und beim Zusammenbau mit dem Getriebe drehfest zur Ausbildung einer Drehmomentstütze verbunden werden, wobei die einzelnen Kupplungsaggregate mit dem Betätigungssystem verdrehbar verbunden und gelagert sind. In weiteren Ausgestaltungsbeispielen kann das Kupplungsaggregat auf der Kurbelwelle aufgenommen und abgestützt sein, während die Betätigungseinrichtung an Getriebegehäuse vormontiert ist. Mit der Betätigungseinrichtung kann gleichzeitig die Kühlmittelpumpe vormontiert werden. Eine Axial- und/oder Radiallagerung dieser kann am Getriebegehäuse vorgesehen sein.

Zur Verminderung oder Eliminierung von von der Brennkraftmaschine in das Getriebe eingetragenen Drehschwingungen kann an der Drehmomentübertragungseinrichtung ein zwischen Kurbelwelle und Eingangsteil der beiden Reibungskupplungen angeordnetes Zweimassenschwungrad vorgesehen werden. Dieses Zweimassenschwungrad kann in die mit Druckflüssigkeit befüllte Kammer integriert sein oder außerhalb der Kammer angeordnet sein. Das Zweimassenschwungrad kann weiterhin einen Teil des Gehäuses für die Kammer bilden und/oder ein Antriebsteil für die Pumpe aufweisen. Die Aufnahme des Zweimassenschwungrads auf der Kurbelwelle kann mittels eines axial flexiblen Scheibenteils, einer so genannten "flexplate" erfolgen. Es versteht sich, dass die Drehmomentübertragungseinrichtung ohne Zweimassenschwungrad ebenfalls in dieser Weise auf der Kurbelwelle aufgenommen sein kann. Besonders vorteilhaft in Verbindung mit den Massenverhältnissen einer Doppelkupplung kann es sein, zwei entgegen zumindest eines in Umfangsrichtung wirksamen Energiespeichers relativ verdrehbaren, bezogen auf das Schwungrad antriebsseitige und abtriebsseitige Massen zumindest vorübergehend miteinander koppelbar zu gestalten, wobei die die Kopplung mittels einer fliehkraftabhängigen Reibeinrichtung erfolgen kann. Besonders vorteilhaft kann die Verwendung einer Koppelung bei Massenverhältnissen sein, bei denen das antriebsseitige Trägheitsmoment größer als das abtriebsseitige ist, beispielsweise weist eine erste, antriebsseitig koppelbare Masse ein Trägheitsmoment von 0,1 ± 0,04 kgm² und eine zweite, abtriebsseitige Masse weist ein Trägheitsmoment von 0,04 + 0,04 kgm² auf. Es hat sich weiterhin als vorteilhaft erweisen, die Kopplung der beiden Massen bis zu einem Bereich von 1200 bis 1800 Umdrehungen pro Minute aufrecht zu erhalten.

Die Montage der Drehmomentübertragungseinrichtung kann in der Weise vorgesehen sein, dass die komplette Baueinheit mit Nehmereinheit und gegebenenfalls mit Zweimassenschwungrad auf einer oder beiden Getriebeeingangswellen des Doppelkupplungsgetriebes aufgenommen und beim Zusammenfügen von Brennkraftmaschine und Getriebe an einem axial flexiblen, mit der Kurbelwelle verbundenen Antriebsbauteil wie "flexplate" drehfest verbunden wird. Es kann auch vorteilhaft sein, Teile des Zweimassenschwungrads oder das gesamte Zweimassenschwungrad getrennt von der Kupplungseinheit mit der Kurbelwelle zu verbinden und über Verbindungselemente wie Steckverbindungen, die eine axiale Verlagerbarkeit und eine drehfeste Mitnahme der verbundene Teile erlauben, eine Verbindung von Brennkraftmaschine und Getriebe zu schaffen. Zu Führungszwecken der Drehmomentübertragungseinrichtung kann an dieser ein Pilotlager vorgesehen sein, mittels dessen die Drehmomentübertragungseinrichtung auf der Kurbelwelle verdrehbar aufgenommen ist. Eine axiale Abstützung der Drehmomentübertragungseinrichtung an der Kurbelwelle, beispielsweise mittels eines Gleitlagers kann ebenfalls von Vorteil sein. Von besonderem Vorteil kann sein, die Drehmomentübertragungseinrichtung beziehungsweise deren axial verlagerbaren Bauteile bei der Montage axial lediglich grob zu justieren, die Betätigungsvorrichtung drehfest, jedoch axial verlagerbar mit dem Getriebegehäuse zu verbinden und bei erstmaligem Betrieb der Drehmomentübertragungseinrichtung durch einen sich einstellenden axial wirksamen Druck des Kühlmittels auf die axial verlagerbaren Bauteile endgültig zu positionieren, beispielsweise indem diese auf entsprechend angeordnete Anschläge auflaufen.

Die Erfindung wird anhand der Figuren näher erläutert. Dabei zeigen:
- Figur 1: einen Teilschnitt einer Drehmomentübertragungseinrichtung,
- Figur 2: einen Teilschnitt einer Drehmomentübertragungseinrichtung,
- Figur 3: einen Teilschnitt mit schematisch dargestellter Anbindung an einen Kühlkreislauf,
- Figur 4: einen Schnitt durch eine Pumpe,
- Figur 5: ein Diagramm zur Darstellung des Volumenstroms in Abhängigkeit von einer Antriebsdrehzahl der Pumpe,
- Figur 6: einen Teilschnitt einer Drehmomentübertragungseinrichtung,
- Figur 7: einen Teilschnitt einer Drehmomentübertragungseinrichtung,
- Figur 8: ein Detail zum Ausführungsbeispiel der Figur 7,
- Figur 9: ein Teilschnitt einer Drehmomentübertragungseinrichtung und
- Figur 10: einen Teilschnitt einer Drehmomentübertragungseinrichtung.
- Figur 11: zeigt eine Betätigungseinrichtung für eine Reibungskupplung,
- Figuren 12 und 13: eine besonders vorteilhafte Ausgestaltung einer Drehmomentübertragungseinrichtung mit einer Dämpfungseinrichtung, die sowohl in Zusammenhang mit Einfachkupplungen als auch mit Doppelkupplungen Verwendung finden kann.

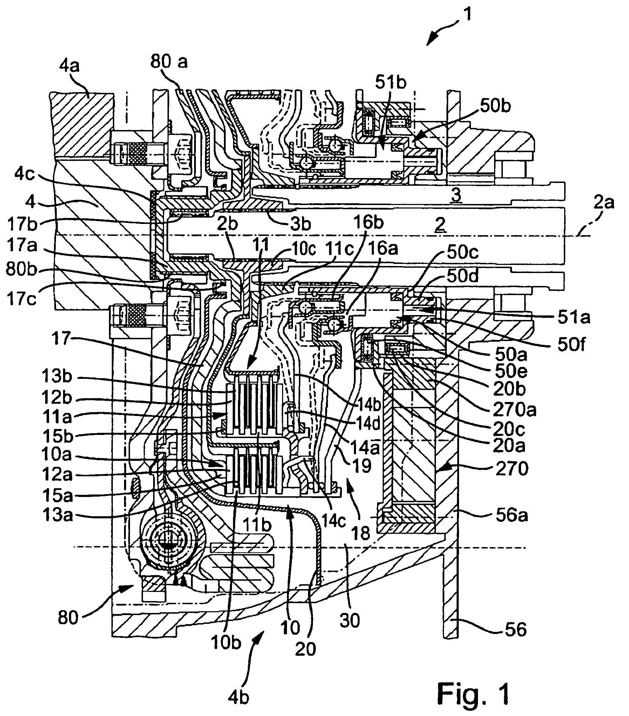

Figur 1 zeigt einen Teilschnitt einer Drehmomentübertragungseinrichtung 1 als Doppelkupplung im Antriebsstrang eines Kraftfahrzeuges, bestehend aus einer - nicht näher gezeigten - Antriebseinheit mit einer in einer Wandung 4a des Motorgehäuses verdrehbar gelagerten Kurbelwelle 4 und einem Doppelkupplungsgetriebe mit einer um eine Rotationsachse 2a rotierenden ersten Getriebeeingangswelle 2 sowie einer zweiten Getriebeeingangswelle 3, die im gezeigten Ausführungsbeispiel als Hohlwelle ausgebildet ist. Die Drehmomentübertragungseinrichtung 1 ist in einer so genannten Kupplungsglocke 4b untergebracht, die mit der Wandung 4a einen geschlossenen Bauraum bildet. Die Drehmomentübertragungseinrichtung 1 gliedert sich in zwei Reibungskupplungen 10,11 mit radial übereinander angeordneten Reibeinheiten 10a und 11a. Jede Reibungskupplung 10, 11 ist jeweils mittels eines Eingangsteils 10b, 11b mit der Kurbelwelle 4 und mittels eines Ausgangsteils 10c, 11c mit jeweils einer Getriebeeingangswelle 2, 3 drehschlüssig verbunden. Im Kraftfluss zwischen den Eingangsteilen 10b, 11b und den Ausgangsteilen 10c, 11c sind den beiden Kupplungen 10, 11 jeweils Reibpartner 12a, 12b bzw. 13a, 13b zugeordnet, wobei diese jeweils ein der entsprechenden Kupplung 10, 11 zugeordnetes Lamellenpaket bestehend aus drehfest mit dem Eingangsteil 10b, 11b verbundenen Reibpartnern 12a, 12b und drehfest mit dem Ausgangsteil 10c, 11c verbundenen Reibpartnern 13a und 13b bilden. Die Anzahl der Reibpartner sowie die Anordnung von metallischen und nichtmetallischen Reibflächen kann entsprechenden Anforderungen folgend ausgelegt werden, wobei es besonders vorteilhaft sein kann, wenn die insgesamt zur Verfügung stehenden Reibflächen beider Reibungskupplungen 10, 11 so ausgelegt werden, dass ein praktisch gleiches übertragbaren Moments über beide Kupplungen resultiert. Dies kann beispielsweise durch eine unterschiedliche Anzahl von Reibpartnern 12a, 12b und 13a, 13b und/oder durch entsprechend unterschiedliche radiale Ringbreiten der Reibflächen erfolgen. Es kann jedoch auch in besonderen Ausführungsformen, beispielsweise bei einem Doppelkupplungsgetriebe mit einem bevorzugten Anfahrgang auf einer Getriebeeingangswelle 2, 3 vorteilhaft sein, die dieser Getriebeeingangswelle zugeordnete Kupplung mit einer entsprechend größeren Übertragungskapazität zu versehen. Es versteht sich, dass die Reibflächen aus der Summe der Flächen aller Reibpartner gebildet werden.

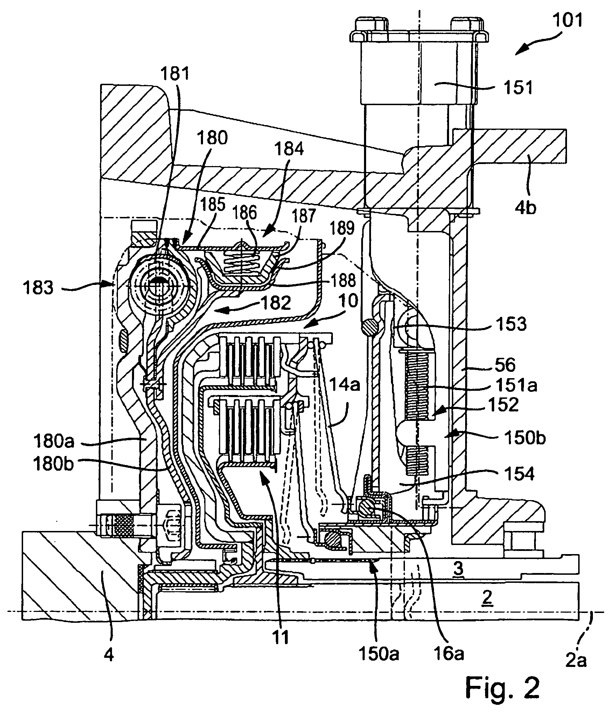

Die Kopplung von Antriebswelle 4 und Getriebeeingangswellen 2, 3 erfolgt durch axiales Verpressen der Reibpartner 12a, 12b, 13a, 13b mittels jeweils einem einer Kupplung 10, 11 zugeordneten Betätigungsteil 14a, 14b gegen jeweils einen auf der gegenüber liegenden Seite der Betätigungsteile 14a, 14b vorgesehenen Anschlag 15a, 15b. Die Anschläge 15a, 15b können aus einem mit dem Eingangs- oder Ausgangsteil axial fest verbundenen Sicherungsring oder aus entsprechend im Eingangs- oder Ausgangsteil angeprägten Nasen, die ringförmig oder über den Umfang verteilt ausgebildet sein können. Die Betätigungsteile 14a, 14b sind vorzugsweise an den Eingangsteilen 10b, 11b der Reibungskupplungen 10, 11 als - physikalische gesehen - einarmige Hebel und technisch gesehen vorzugsweise als Bauteile mit einem Kraftrand und sich daran anschließende über den Umfang verteilte Zungen oder ähnliche Scheibenteile ausgebildet, wobei die in Figur 2 durchgezogenen Linien die Ruheposition bei geöffneter Kupplung 10, 11 und die gestrichelten Linien die Betätigungsteile 14a, 14b in eingerückter Position der Kupplung 10, 11 zeigen. Die Betätigungsteile 14a, 14b beaufschlagen die Reibeinheiten 10a, 11a mittels eines Beaufschlagungselementes 14c, 14d, das jeweils zwischen dem Betätigungsteil 14a, 14b und einem Reibpartner 12a, 12b angeordnet ist, so dass bei zunehmender Betätigung, das heißt, axialer Verlagerung der radialen Innenseite der Betätigungsteile 14a, 14b bei gleichzeitig axial fester Verspannung am äußeren Ende entsprechend einem axialen Hebel ein axialer Relativweg auf die Reibeinheiten 10a, 11a übertragen wird, so dass mit zunehmendem Weg die Reibungskupplungen 10, 11 ein zunehmendes Drehmoment von der Kurbelwelle 4 auf die jeweils zugeordnete Getriebeeingangswelle 2, 3 übertragen. Die Übertragung des Drehmoments erfolgt beispielsweise mittels einer Verzahnung 2a, 3a zwischen der jeweiligen Getriebeeingangwelle 2, 3 und den Ausgangsteilen 10c, 11c der Reibungskupplungen 10,11. Die Ausgangsteile können dabei massiv als Schmiede-, Sinter- oder Gussteile, als Blechformteile oder aus einer Kombination dieser gebildet sein, wobei die Verbindungen dieser Teile geschweißt oder vernietet sein können. Die Betätigungsteile 14a,14b sind vorzugsweise aus Metall geprägte und/oder gestanzte Scheibenteile, die zur Bereitstellung einer elastischen Eigenschaft aus Federstahl und gebildet und/ oder an ihren Enden entsprechend aufgestellt sein können. Zur Erhöhung der Verschleißfestigkeit können sie gehärtet sein.
Die Betätigungsteile 14a, 14b drehen mit derselben Drehzahl wie die Eingangsteile der Kupplung, so dass die Betätigungsvorrichtungen 50a, 50b zur Betätigung der Betätigungsteile 14a, 14b von diesen daher mittels der Betätigungslager 16a, 16b drehentkoppelt sein müssen. Bei dem gezeigten Beispiel handelt es sich um so genannte zugedrückte Reibungskupplungen 10, 11, die im entspannten Zustand der Betätigungsvorrichtungen 50a, 50b geöffnet und mit zunehmender Betätigung der Betätigungsteile 14a, 14b geschlossen wird, das heißt, Moment überträgt. Es versteht sich, dass auch andere Ausführungsbeispiele, bei denen über - physikalisch gesehen - zweiarmige Betätigungsteile die Kupplung im unbeaufschlagtem Zustand zugedrückt und bei Betätigung der Betätigungsteile durch die Betätigungsvorrichtungen 50a, 50b aufgedrückt wird, vorteilhaft sein können. In diesem Falle wären die Betätigungslager 16a, 16b so genannte Ausrücklager, während sie in dem gezeigten Ausführungsbeispiel als Einrücklager zu bezeichnen sind.

Die Betätigungsvorrichtungen 50a, 50b sind in dem dargestellten Ausführungsbeispiel als hydraulische Nehmereinheiten 51a, 51b ausgebildet, die von außen beispielsweise mittels einer Pumpeneinheit oder mittels eines Geberzylinders, der wiederum elektromotorisch beaufschlagt sein kann, durch Aufbau eines Drucks axial verlagert werden und über die Betätigungslager 16a, 16b und die Betätigungsteile 14a, 14b die Reibungskupplungen beaufschlagen. Vorzugsweise sind pro Reibungskupplung 10, 11 mehrere, über den Umfang verteilte Nehmereinheiten 51a, 51b in der Weise vorgesehen, dass sie die radial übereinander liegenden Betätigungslager 16a, 16b beaufschlagen können, obwohl sie auf annähernd einem Durchmesser über den Umfang angeordnet sind.
Eine Abdichtung der Kammer 30 zu den hydraulischen Nehmereinheiten 51, 51b erfolgt gegenüber dem Getriebe 56 auf Seiten des axialen Ansatzes 50d des Gehäuses 50c mittels Dichtungen, wie hier anhand der 50f gezeigt.

Die Drehmomentübertragungseinrichtung 1 ist in der Weise vorgesehen, dass sie als Baueinheit an das mit der Kurbelwelle 4 drehfest verbundene Zweimassenschwungrad 80 montiert werden kann. Hierzu sind die Betätigungsvorrichtungen 50a, 50b fest an einem scheibenförmigen Bauteil verdrehbar aufgenommen, so dass das Gehäuse 50c der Betätigungsvorrichtungen 50a, 50b drehfest an einer Wandung 56a des Doppelkupplungsgetriebes aufgenommen werden kann. Dabei ist das gemeinsame Gehäuse 50c der Nehmereinheiten 51a, 51b mittels zumindest eines Ansatzes 50d in einer entsprechenden Aufnehmung des Getriebes bzw. eines mit dem Gehäuse 56 des Getriebes verbundenen Bauteil 56b so verbunden, dass sich das durch die Lastmomente der Betätigungslager 16a, 16b entstehende Moment am Gehäuse abstützen kann. Weiterhin ist zwischen dem Gehäuse 50 c und der am Bauteil 19 befestigten Aufnahme 20a zur Aufnahme des Getriebegehäuses 56 ein Lager 50e, beispielsweise ein Wälz- oder Gleitlager vorgesehen, das die Betätigungskraft innerhalb der Kupplung abstützt, so dass praktisch keine Axialkräfte in das Getriebegehäuse eingeleitet werden.

Die Reibungskupplungen 10, 11 sind vorzugsweise nass laufende Reibungskupplungen, das heißt, dass sie für einen Betrieb im Ölbad vorgesehen sind. Hierzu kann es vorteilhaft sein, wenn beide Kupplungen eine gemeinsames Eingangsteil 17 aufweisen, das vorzugsweise topfförmig einseitig geöffnet ausgebildet ist, so dass ein einseitig offenes Gehäuse 18 für die Reibeinheiten 10a, 11a entsteht. Das gemeinsame Eingangsteil 17 kann als Blechformteil ausgebildet sein und im Bereich der Rotationsachse 2a, eine Ausnehmung aufweisen, in der ein axialer Ansatz 17a aus einem anderen, beispielsweise gehärteten Material eingebracht ist, der die Zentrierung der Kupplung auf einer der beiden Getriebeeingangswellen 2, 3 (hier gezeigt: Getriebeeingangswelle 2) übernimmt. Hierzu kann zwischen der Getriebeeingangswelle 2 und dem axialen Ansatz 17a ein Pilotlager 17b vorgesehen sein. Weiterhin kann am Außenumfang des Ansatzes 17a ein drehschlüssiger Kontakt zum Ausgangsteil 80a des Zweimassenschwungrades 80 vorgesehen sein, beispielsweise als Steckverbindung 80b zur Montage der Drehmomentübertragungseinrichtung 1 auf den Zweimassenschwungrad. Weiterhin bildet der axiale Ansatz 17a unter Zwischenlegung eines Lagers wie Gleitlager 4c, den Anschlag der Drehmomentübertragungseinrichtung 1 an der Kurbelwelle.

Das axiale Spiel zwischen der Drehmomentübertragungseinrichtung 1 und der Kurbelwelle 4 wird eingestellt, in dem bei erstmaligem Betätigen der Betätigungsvorrichtungen 50a, 50b die Drehmomentübertragungseinrichtung 1 durch Druckaufbau der Nehmereinheiten 51a, 51b vom Getriebegehäuse 56 entlang der Ansätze 50d beabstandet wird und/oder ein Druck in der mit Kühlmittel zumindest teilweise befüllten Kammer 30 aufgebaut wird.

In dem gezeigten Ausführungsbeispiel ist vorgesehen, das Zweimassenschwungrad 80 und die Nasskupplungen 10,11 von einander zu isolieren, so dass das Zweimassenschwungrad trocken laufend und die Reibungskupplungen 10,11 nass laufend betrieben werden können. Hierzu ist ein Scheibenteil 20, beispielsweise eine Membrane vorgesehen, die gegenüber der Kupplungsglocke 4b und gegenüber dem Eingangsteil 17, beispielsweise hier am axialen Ansatz 17a, mittels einer Dichtung 17c abgedichtet ist.

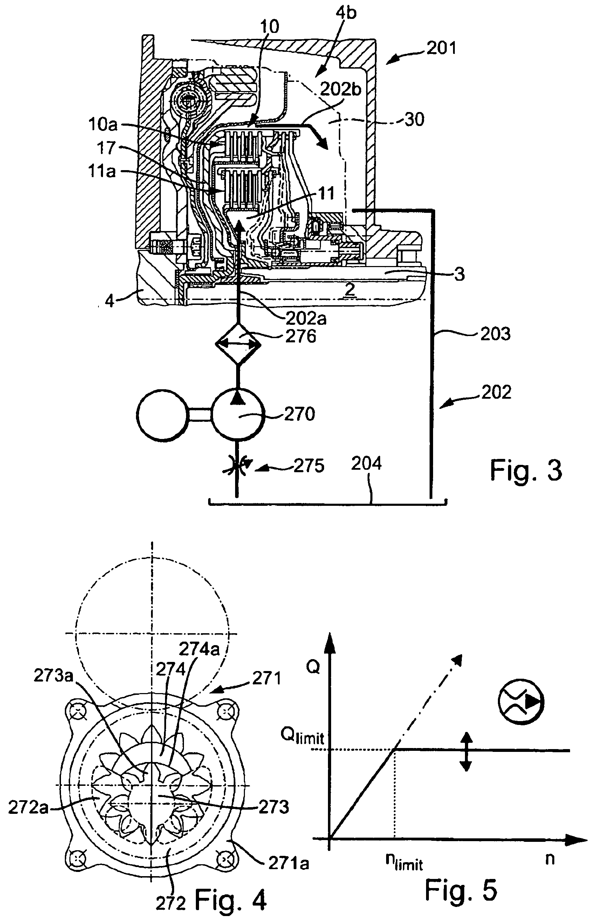

Zur Kühlung des in der Kammer 30 enthaltenen Öls ist innerhalb der Kupplungsglocke 4b eine Pumpe 270 enthalten, die als Zahnradpumpe von dem Eingangsteil 17 der Reibungskupplungen 10, 11 angetrieben wird. Hierzu ist an dem mit dem Eingangsteil 17 verbundenen Bauteil 19 die mit diesem verbundene Aufnahme 20a mit einem axialen Ansatz 20b versehen, der an seinem Innenumfang sich über das Lager 20c verdrehbar abstützt und an seinem Außenumfang das Hohlrad 272 antreibt, wobei das Pumpengehäuse fest mit dem Getriebegehäuse 56 verbunden ist. Die nähere Erläuterung der Funktion der Pumpe 270 erfolgt in Figur 4. Mittels der Pumpe 270 wird im vorteilhafterweise mit dem Getriebe gemeinsamen Sumpf befindliches Öl in Richtung der Reibpartner 12a, 12b, 13a, 13b gepumpt, wobei die Förderleistung der Pumpe in Abhängigkeit von der eingetragenen Reibenergie gesteuert werden kann. Es versteht sich dass bei diesem Vorgang auch zu versorgende Schmierstellen des Kupplungsbereichs mit Schmiermittel versorgt werden können und die so ausgestaltete Pumpe für sich auch zur Druckversorgung anderer Getriebe vorteilhaft sein kann.

Figur 2 zeigt eine Drehmomentübertragungseinrichtung 101 mit an sich ähnlichen Reibungskupplungen 10, 11 die von der Kurbelwelle 4 ein Drehmoment auf die Getriebeeingangswellen 2, 3 übertragen können. Unterschiedlich hierzu ist die Art der Betätigungsvorrichtung 150a, 150b. Die Betätigungsvorrichtungen 150a, 150b sind gegenüber der Rotationsachse 2a winkelverschoben, so dass lediglich die Betätigungsvorrichtung 150b detailliert dargestellt wird. Die Betätigungsvorrichtung 150a ist im Wesentlichen jedoch mit gleicher Funktion versehen. Die Betätigungsvorrichtung 150a besteht aus einem Drehantrieb 151, der außerhalb der Kupplungsglocke 4b angeordnet sein kann und eine Spindel 151a antreibt. Die Spindel 151a bildet mit einem Nocken 153 ein Getriebe 152, wobei sich der Nocken gehäusefest am Getriebegehäuse 56 abstützt und infolge der Drehbewegung der Spindel 151a mittels des Drehantriebes 151 radial verlagert wird. Der Nocken 153 beaufschlagt dabei den einseitig verdrehbar eingespannten und in Radialrichtung mit einem Axialprofil versehenen Hebel 154, so dass bei einer Verdrehung der Spindel 151a durch den Drehantrieb 151 eine axiale Verlagerung des profilierten Hebels 154 erfolgt, der auf das Einrücklager 114a einwirkt und damit das Betätigungsteil 116a betätigt, so dass eine Kupplungsbetätigung wie unter Figur 1 erfolgt. Die Betätigungsvorrichtungen 150a und 150b sind detailliert in der DE 103 40 528 A1 beschrieben und näher erläutert.

Ein weiterer Gedanke ist in Figur 2 am Zweimassenschwungrad 180 vorgesehen. Das Zweimassenschwungrad 180 ist in der Weise ausgestaltet, dass eine erste Masse 183 primärseitig direkt mit Kurbelwelle 4 verbunden ist und eine zweite Masse 182 entgegen der Wirkung der Energiespeicher 181 relativ gegenüber der ersten Masse verdrehbar ist. In besonderen Fällen kann es jedoch nachteilig sein, diese Verdrehbarkeit uneingeschränkt aufrecht zu erhalten. Daher ist zwischen den beiden Massen eine Reibeinrichtung 184 vorgesehen, die beide Massen 182, 183 durch die sich einstellende Reibkraft miteinander verbindet. Hierzu ist am Eingangsteil 180a des Zweimassenschwungrads 180 mit der Masse 183 ein im Wesentlichen ringförmiger, axial auskragender Ansatz 185 vorgesehen, an dessen Innenumfang entgegen eines radial nach innen wirkenden Energiespeichers 186 über den Umfang verteilte radial verlagerbare Reibelemente 187 vorgesehen, die mit einem an dem Ausgangsteil 180b des Zweimassenschwungrades 180 im Querschnitt U-förmigen Ringteils 188 vorzugsweise unter Zwischenschaltung von Reibbelägen 189 einen Reibschluss bilden und damit die beiden Massen 182 und 183 miteinander verbinden. Auf diese Weise wird die Funktion des Zweimassenschwungrades 180 bis zu einer vorgegebenen Drehzahl der Kurbelwelle 4, auf die Funktion eines einfachen Schwungrades verringert. Bei höheren Drehzahlen folgt aufgrund der Fliehkraft eine Verlagerung der Reibelemente 187 entgegen der Federkraft der Energiespeicher 186 und die Zweimassen 182 und 183 erhalten eine Verdrehbarkeit entgegen der Wirkungen der Energiespeicher 181, so dass die Funktion eines Zweimassenschwungrades erfüllt wird. Dabei kann die Masse der Reibelemente 187 sowie die Federkraft der Energiespeicher 186 so abgestimmt werden, dass die Freigabe der Reibelemente 187 bei einer gewünschten Drehzahl der Kurbelwelle 4 erfolgt. Vorzugsweise werden die beiden Massen 182, 183 bei Drehzahlen höher der Leerlaufdrehzahl abgekuppelt.

Figur 3 zeigt eine der Drehmomentübertragungseinrichtung 1 der Figur 1 ähnlich Drehmomentübertragungseinrichtung 201 mit einem schematisch dargestellten Kreislauf einer hydraulischen Einrichtung 202 zur Kühlung der Reibpartner der Reibungskupplungen 10, 11. Mittels einer Pumpe 270. wie beispielsweise in Figur 1 in die Kupplungsglocke 4b integrierten Pumpe, die einen Innenzahnradpumpe 271 (Figur 4) sein kann und die von der Drehmomentübertragungseinrichtung 201, beispielsweise mittels des Eingangsteils 17 der beiden Reibungskupplungen 10, 11 angetrieben werden kann, wird über einen Ölkühler 276 das Öl bzw. Kühlmittel auf die beiden Kupplungen aufgebracht. Vorteilhaft kann es sein, den Kühlmittelstrom so zu gestalten, dass er vorzugsweise zuerst auf der Kupplung 10, 11 auftrifft, mit der vorwiegend das Fahrzeug angefahren wird. Unterstützt durch die Fliehkraft wird das Öl durch die Reibungskupplungen radial durch die Reibeinheiten 10a, 11a vorzugsweise entlang der Pfeile 202a, 202b befördert und die durch eine Differenzdrehzahl der Kurbelwelle 4 und der Getriebeeingangswellen 2 während einer Schlupfphase erzeugte Reibungswärme kompensiert. Aus der Kammer 30 fließt das Kühlmittel über die schematisch dargestellte Leitung 203 in einen drucklosen Sumpf 204 ab, von dem es mittels der Pumpe 270 wieder in den hydraulischen Kreislauf zur Kühlung der Kupplungen 10, 11 gebracht wird.

Es hat sich gezeigt, dass es besonders vorteilhaft sein kann, beispielsweise um Energie zu sparen, die Pumpe mit einem Volumenstromregelventil 275 vorzusehen, mittels dessen der Volumenstrom auf den Kühlungsbedarf der Kupplungen 10, 11 angepasst wird. Das Volumenstromregelventil kann beispielsweise elektrisch gesteuert werden und in Abhängigkeit von der Drehzahl einer der Wellen 2, 3, 4 gesteuert werden. Figur 5 zeigt hierzu ein entsprechendes Diagramm, in dem der Volumenstrom Q gegen die Drehzahl N der Kurbelwelle 4 aufgetragen ist. Der an sich proportionale Verlauf zwischen dem Volumenstrom Q und der Drehzahl N bei an das Eingangsteil 17 der Drehmomentübertragungseinrichtung 201 angekuppelten Pumpe 270, kann durch das Volumenstrombegrenzungsventil oder Saugdrossel bei einer vorgebbaren Drehzahlgrenze Nₗᵢₘᵢₜ auf einen vorgebbaren Volumenstrom Qₗᵢₘᵢₜ begrenzt werden. Im einfachsten Fall besteht das Volumenstrombegrenzungsventil aus einer Saugdrossel. Weiterhin kann eine hierzu alternative Steuerung des Volumenstrombegrenzungsventil in der Weise erfolgen, dass die so genannte Schlupfdrehzahl als Regelgröße herangezogen wird, wobei der Schlupf aus der Drehzahl jeweils einer Getriebeeingangswelle 2, 3 und der Kurbelwelle 4 ermittelt wird. Hieraus kann ein Volumenstrom des Druckmittels unmittelbar auf den Kühlungsbedarf der Kupplungen 10, 11 zurückbezogen werden.

Figur 4 zeigt ein vorteilhaftes Ausgestaltungsbeispiel einer Innenzahnradpumpe 271, die im Innenraum der Kammer 30 direkt, sozusagen vor Ort, einsetzbar ist. Die Innenzahnradpumpe 271 weist ein Gehäuse 271a auf, dass ortsfest, beispielsweise an einer Wandung 56a des Getriebegehäuses 56 (Figur 1) montiert ist. Radial am Innenumfang anliegend ist ein Hohlrad 272 vorgesehen, das von einem drehenden Bauteil beispielsweise vom Ansatz 20b der Figur 1 angetrieben wird. Mit der am Innenumfang des Hohlrads 272 angeordneten Innenverzahnung 272a kämmt das Hohlrad 272 mit der Außenverzahnung 273a des Sonnenrads 273 zur Erzeugung der Pumpwirkung. Die Saugsichel 274 trennt die Saug- von der Druckseite und bildet mittels eines Kreissegmentes 274a eine Lagerung bzw. Zentrierung für das Sonnenrad 273 über dessen Außenumfänge der Außenverzahnung 273a, so dass dieses nicht separat gelagert wird.

Eine derartige Anordnung und Ausgestaltung einer Zahnradpumpe und dessen Antrieb ist nicht auf die Verwendung eines Kühlmittelstroms zur Kühlung einer Kupplung beschränkt, vielmehr kann eine derartige Anordnung auch zur Druckversorgungseinrichtung für die Betätigung von Kupplungen und Getrieben vorgesehen werden, beispielsweise von automatisierten Schaltgetrieben, automatischen Stufengetrieben, zur Verstellung von Verstellzylindem stufenloser Umschlingungsmittelgetrieben sowie zur Betätigung von trocken oder nass laufenden Reibungskupplungen wie Doppelkupplungen und Wandlerüberbrückungskupplungen.

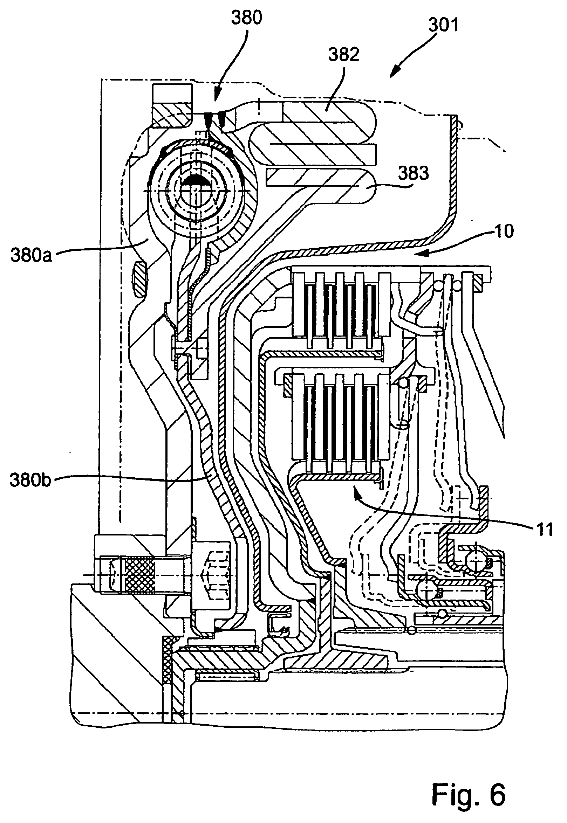

Figur 6 zeigt eine Drehmomentübertragungseinrichtung 301 mit einem geänderten Zweimassenschwungrad 380 und zwei Reibungskupplungen 10,11 als Teilschnitt. In vorteilhafter Weise werden bei dem Zweimassenschwungrad 380 die ersten und zweiten Massen 382, 383 als Blechformteile ausgebildet und im Wesentlichen an dem Eingangsteil 380a bzw. an dem Ausgangsteil 380b axial so ausgerichtet, dass die angeformten Massen 382, 383 im Wesentlichen radial über den Kupplungen 10, 11 angeordnet sind.

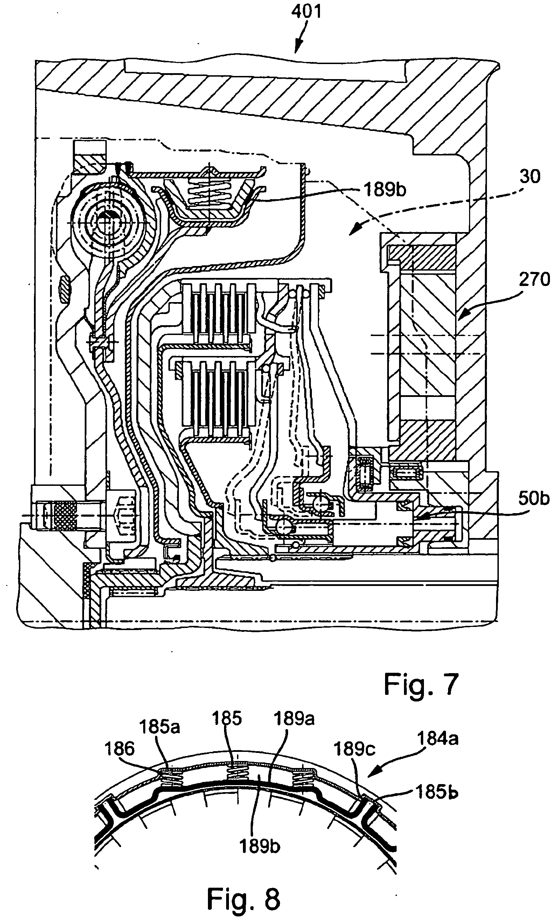

Figur 7 zeigt einen Teilschnitt einer Drehmomentübertragungseinrichtung 401, die in der Weise von der Drehmomentübertragungseinrichtung 101 der Figur 2 abgeändert ist, dass statt der Betätigungsvorrichtungen 150a, 150b in Form von Hebelausrückern ein hydraulisches Ausrücksystem in Form der Betätigungsvorrichtungen 50a, 50b - wie in Figur 1 näher beschrieben - eingesetzt werden. Dargestellt ist in diesem Schnitt lediglich die Betätigungseinheit 50b. Weiterhin weist die Drehmomentübertragungseinrichtung 401 eine in der mit Kühlmedium befüllten Kammer 30 angeordnete Pumpe 270 auf, wie sie bereits in Figur 1 sowie in den Figuren 3-5 näher erläutert wurde.

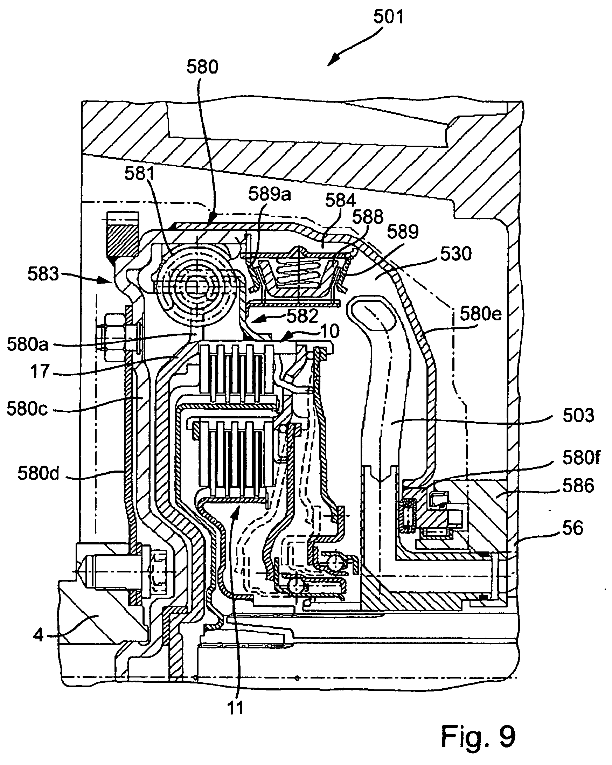

Figur 8 zeigt ein Detail einer zu den Einrichtungen 184 der Figur 2 und 584 der Figur 9 geänderten Ausführungsform einer Reibeinrichtung 184a zur Koppelung der beiden Massen eines Zweimassenschwungrads. Hierzu sind in dem ringförmigen Ansatz 185 Aufnahmen für die Energiespeicher 186 vorgesehen, beispielsweise eingeprägt. Die Energiespeicher 186 beaufschlagen radial begrenzt, verlagerbare Reibsegmente 189a, die bei Vorspannung mittels der Energiespeicher 186 einen Reibschluss mit einer lediglich angedeuteten, im Konus der Reibsegmente 189a befindlichen Reibfläche 189b (siehe Figur 7) bilden. An den Reibsegmenten 189a oder an der Gegenreibfläche können Reibbeläge angeordnet sein. Ein weiteres Ausgestaltungsbeispiel kann insbesondere bei kleineren Reibwerten in Nasskupplungen in Lamellenbauweise vorgesehen sein, bei dem eine mit einem ersten Massebauteil drehfest verbundene Reiblamelle in beidseitigem Reibkontakt mit Bauteilen des anderen, über den Reibschluss mit dem ersten Massebauteil zu verbindenden Bauteil steht (siehe Figur 9). Infolge Fliehkraft werden die Reibsegmente 189a - wie in der Figur 8 gezeigt - nach radial außen verlagert und kommen zum Anschlag mit dem ringförmiger Ansatz 185. Um bei Einwirkung des Reibmoments eine Verlagerung der Reibsegmente 189a in Umfangsrichtung zu vermeiden, ist an den Ringsegmenten ein nach radial außen erweiterter Anschlag 189c vorgesehen, der in eine radial nach außen erweiterte Einbuchtung 185b erstreckt ist und bei einer Verlagerung der Reibsegmente 189a nach radial außen infolge Fliehkraft den Weg der Reibsegmente 189a radial begrenzt.
Es versteht sich, dass derartige Reibeinrichtungen 184a auch mit Reibeinrichtungen radial außen versehen sein können und beliebige Schwungmassen miteinander verbinden können. Bevorzugt kann auch die Koppelung von Elektromaschinen mit einer oder beiden Massen eines Zweimassenschwungrads sein.

Figur 9 zeigt einen Teilschnitt einer Drehmomentübertragungseinrichtung 501 mit einem in die mit Kühlmittel gefüllten Kammer 530 integrierten Zweimassenschwungrad 580 mit den entgegen der Wirkung der Energiespeicher 581 begrenzt verdrehbaren Massen 582, 583. Zur Koppelung der beiden Massen 582, 583 ist eine Reibeinrichtung 584 vorgesehen, die sich von den zuvor beschriebenen Reibeinrichtung 184 der Figur 1 dadurch unterscheidet, dass das Reibelement 589 als so genannte Reiblamelle mit zwei Reibflächen ausgebildet ist, die jeweils einen Reibkontakt zu den eingangsseitigen Bauteilen 589a sowie zum Ringteil 588 ausbilden. Das Reibelement 589 ist drehschlüssig am ausgangsseitigen Teil des Schwungrades 580 angeordnet. Die Energiespeicher 581 sind radial außerhalb der Reibungskupplungen 10, 11 vorgesehen. Das mittels eines axial elastischen Elements 580d mit der Kurbelwelle 4 verbundene Eingangsteil 580c des Zweimassenschwungrads 580 beaufschlagt die Energiespeicher 851 von radial außen, während das Ausgangsteil 580a des Zweimassenschwungrads das in das Zweimassenschwungrad 580 eingetragene Moment auf das beiden Kupplungen 10, 11 gemeinsame Eingangsteil 17 überträgt. Dabei kann das Ausgangsteil 580a direkt mit dem Eingangsteil verbunden, beispielsweise verschweißt sein. Zur Bildung der geschlossenen Kammer 530 ist am äußeren Umfang des Eingangsteils 580c ein topfförmiges Bauteil 580e vorgesehen, dass radial innen mit einem Aufnahmeteil 580f verbunden ist, welches von einer Aufnahme 586, die fest mit dem Getriebegehäuse 56 verbunden ist, aufgenommen und zentriert ist. In der Kammer 530 ist weiterhin ein Schöpfrohr 503 vorgesehen, das infolge Fliehkraft nach außen gedrängtes Kühlmittel schöpft und dem Sumpf 204 (Figur 3) zuführt um dem hydraulischen Kreislauf 202 (Figur 3) zur Kühlung der Kupplungen 10, 11 wieder zur Verfügung zu stehen. Nicht dargestellt ist der Antrieb der Pumpe mittels der Aufnahme 580f bzw. dem topfförmigen Bauteil 580e.

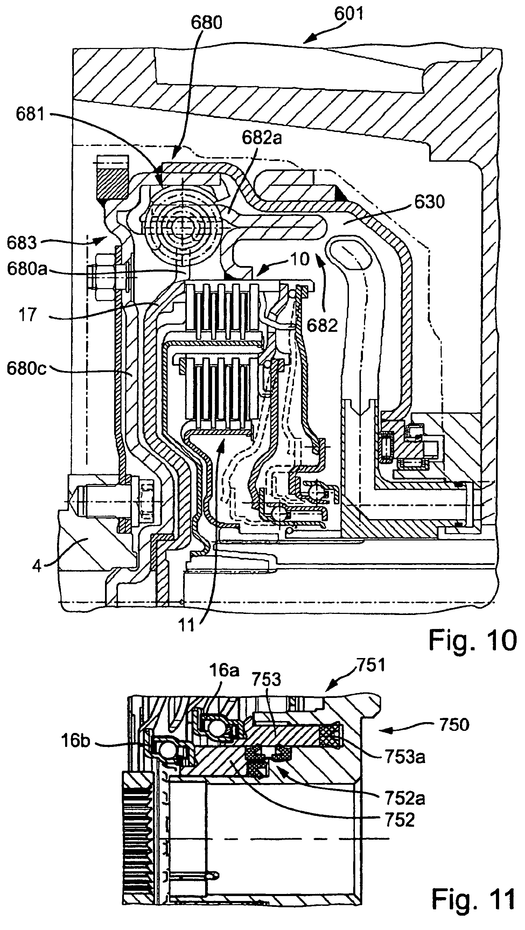

Figur 10 zeigt eine gegenüber der Drehmomentübertragungseinrichtung 501 der Figur 9 leicht abgewandelte Ausführungsform einer Drehmomentübertragungseinrichtung 601 im Teilschnitt. Das ebenfalls in der mit Kühlmittel befüllten Kammer 630 angeordnete Zweimassenschwungrad 680 ist dabei ohne Reibeinrichtung zur Verbindung der beiden Massen 682, 683 ausgestaltet, wobei die Masse 682 in der Weise ausgestaltet ist, dass sie mit dem Eingangsteil 17 der Kupplungen 10, 11 fest verbunden ist und direkt mit einem axial angeformten Ansatz 682a von den Energiespeichern beaufschlagt wird und das über die Kurbelwelle 4 und das Eingangsteil 680c auf die Energiespeicher 681 übertragene Moment auf das Eingangsteil 17 überträgt. Dabei kann ein weiteres Ausgangsteil 680a in die Energiespeicher 681 eingreifen, das ebenfalls direkt mit dem Eingangteil 17 der Kupplungen 10, 11 verbunden ist. Vorteilhafter Weise kann dieses Ausgangsteil 680a aus dem Eingangsteil 17 gebildet sein, indem entsprechende Laschen ausgestellt werden. Ansatz 682a und Ausgangsteil 680a können dabei auf unterschiedliche Gruppen der Energiespeicher 681 einwirken und/oder die Teile 680a, 682a können bei unterschiedlichen Verdrehwinkeln der Relativbewegung gegenüber dem Eingangsteil 680c entgegen der Energiespeicher 681 wirksam werden, so dass eine zweistufige Kennlinie des Zweimassenschwungrads 680 vorgesehen werden kann.

Figur 11 zeigt eine vorteilhafte Betätigungsvorrichtung 750 für die beiden Reibungskupplungen 10, 11 der zuvor beschriebenen Drehmomentübertragungseinrichtungen mit einer Nehmereinheit 751, der zwei Ringkolben 752, 753 zugeordnet sind, die direkt aufeinander und radial übereinander angeordnet sind. Die Kolben 752, 753 werden dabei jeweils von einem von außen an eine Kammer 752a, 753a angelegten Druck axial verlagert, wodurch die Kolben 752, 753 mittels der Betätigungslager 16a, 16b die Betätigungsteile 14a, 14b (Figur 1) betätigen und damit die Kupplung einrücken. Das Einrücken der Kupplungen 10, 11 erfolgt dabei entgegen einer durch Elastizität der Betätigungsteile 14a, 14b sich einstellenden Rückstellkraft, so dass bei Abbau des Drucks in den Kammern 752a, 753a die Kupplungen selbsttätig wieder geöffnet werden. Es versteht sich, dass die Rückstellkraft zum Schließen der Kupplungen auch an anderer Stelle, beispielsweise in zum Druckaufbau vorgesehenen Geberzylindern durch entsprechende Energiespeichermaterialien wie Schraubenfedern bereit gestellt werden können.

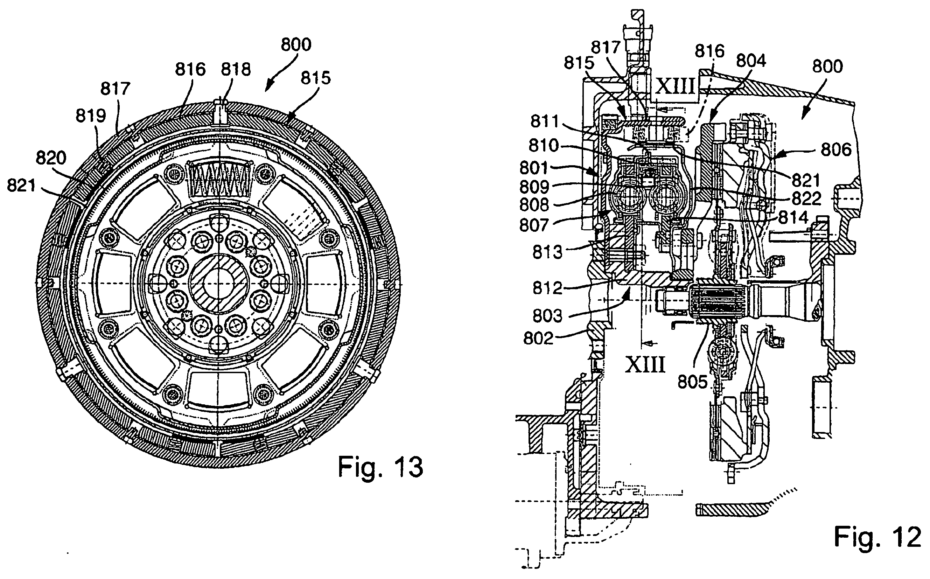

Die in den Figuren 12 und 13 dargestellte Drehmomentübertragungseinrichtung 800 umfasst einen Drehschwingungsdämpfer 801, der ein mit der Abtriebswelle 802 eines Motors verbindbares Primärteil 803 und ein gegenüber diesem verdrehbares Sekundärteil 804 aufweist. Das Primärteil 803 und Sekundärteil 804 bilden Schwungräder, die ein entsprechendes Trägheitsmoment aufweisen. Auf dem Sekundärteil 804 ist unter Zwischenlegung einer Kupplungsscheibe 805 eine Reibungskupplung 806 aufgenommen. Zwischen dem Primärteil 803 und dem Sekundärteil 804 ist ein drehelastischer Dämpfer 807 vorgesehen, der zwei in Reihe geschaltete Federgruppen 808 und 809 besitzt, die hier in einer durch Blechteile 810 gebildete Kammer 811 aufgenommen sind. Die Kammer 811 kann vorzugsweise zumindest teilweise mit einem Schmiermittel befüllt sein. Die beiden Federgruppen 808 und 809 sind axial hintereinander und praktisch auf gleichem Durchmesser angeordnet. Das Primärteil 803 besitzt einen axialen Ansatz 812, auf dem das Sekundärteil 804 verdrehbar gelagert ist, und zwar hier über eine Gleitlagerung. Die Reihenschaltung der Federgruppen 808, 809 erfolgt bei dem dargestellten Ausführungsbeispiel über scheibenförmige Bauteile, welche entsprechende Aufnahmen für die Federn 808 und 809 besitzen und hier mit den die Kammer 811 begrenzenden Blechteilen 810 drehverbunden sind. Das Eingangsteil des drehelastischen Dämpfers ist durch ein flanschartiges Bauteil 813 gebildet, das mit dem Primärteil 803 drehverbunden ist. Das Ausgangsteil des drehelastischen Dämpfers 801 ist ebenfalls durch ein flanschartiges Bauteil 814 gebildet, das mit dem Sekundärteil 804 drehfest ist.

Wie aus der Figur 13 ersichtlich, sind die die Kammer 811 bildenden Blechteile 810 sowie die mit diesen verbundenen Beaufschlagungsscheiben für die Federn 808 und 809 schwimmend gegenüber dem Primär- bzw. Eingangsteil 803 und Sekundär- bzw. Ausgangsteil 804 angeordnet, das bedeutet also, gegenüber diesen beiden Teilen verdrehbar angeordnet.

Zwischen den beiden als Trägheitskörper bzw. Schwungmassen ausgebildeten Teilen 803 und 804 ist weiterhin eine Reibungskupplung bzw. Reibeinrichtung 815 vorgesehen, die bei niedrigen Drehzahlen, zum Beispiel unterhalb der Leerlaufdrehzahl des Motors, auch als Überbrückungskupplung dient. Die Reibungskupplung 815 besitzt Fliehgewichte 816, die von einem axialen Ansatz 817 des Primärteils 803 getragen werden. Bei dem dargestellten Ausführungsbeispiel sind hierfür radiale Führungsbolzen 818 an dem axialen Ansatz 817 vorgesehen. Die Fliehgewichte 816, die über den Umfang segmentartig ausgebildet sind, werden über Federn 819, welche vorgespannt sind, in radialer Richtung nach innen gedrängt und stützen sich hier über Reibbeläge bzw. Reibbereiche 820 an einem axialen Ansatz 821, der vom Sekundärteil 804 getragen wird, ab (zumindest unterhalb einer bestimmten Drehzahl). Der axiale Ansatz 821 ist bei dem dargestellten Ausführungsbeispiel durch ein topfförmig ausgebildetes Blechformteil 822 gebildet, welches drehfest mit dem Sekundärteil 804 ist.

Die Reibungskupplung bzw. Überbrückungskupplung 815 ist parallel wirksam zu dem drehelastischen Dämpfer 801, so dass dieser entsprechend der Auslegung bzw. Vorspannung der Federn 819 zumindest ab einer bestimmten Mindestdrehzahl überbrückt werden kann. Dadurch kann unter anderem die insbesondere beim Starten des Motors vorhandene Resonanzproblematik behoben werden.

Aufgrund der verhältnismäßig großen winkelmäßigen Bemessung der segmentartigen Fliehgewichte 816 haben diese eine bremsbandartige Verstärkungswirkung. Bei dem dargestellten Ausführungsbeispiel sind über den Umfang betrachtet drei derartige Fliehgewichte 816 vorgesehen, die sich praktisch jeweils um 120 Winkelgrad erstrecken.

Aus Figur 12 ist ersichtlich, dass bei der dargestellten Ausführungsform das Sekundärteil 804 lediglich eine einfache Kupplung trägt. Anstatt der Einfachkupplung 806 könnte jedoch auch eine Doppelkupplung vorgesehen werden, wie sie beispielsweise in Zusammenhang mit den übrigen Figuren beschrieben sind.

### Bezugszeichenliste

| | | | |
|---|---|---|---|
| 1 | Drehmomentübertragungseinrichtung | 184 | Reibeinrichtung |
| 2 | Getriebeeingangswelle | 184a | Reibeinrichtung |
| 2a | Rotationsachse | 185 | ringförmiger Ansatz |
| 2b | Verzahnung | 185b | Einbuchtung |
| 3 | Getriebeeingangswelle | 186 | Energiespeicher |
| 3b | Verzahnung | 187 | Reibelement |
| 4 | Kurbelwelle | 188 | Ringteil |
| 4a | Wandung | 189 | Reibbelag |
| 4b | Kupplungsglocke | 189a | Reibsegment |
| 4c | Dichtung | 189 | b Reibfläche |
| 10 | Reibungskupplung | 189c | Anschlag |
| 10a | Reibeinheit | 201 | Drehmomentübertragungseinrichtung |
| 10b | Eingangsteil | 202 | hydraulische Einrichtung |
| 10c | Ausgangsteil | 202a | Pfeil |
| 11 | Reibungskupplung | 202b | Pfeil |
| 11a | Reibeinheit | 203 | Leitung |
| 11b | Eingangsteil | 204 | Sumpf |
| 11c | Ausgangsteil | 270 | Pumpe |
| 12a | Reibpartner | 271 | Innenzahnradpumpe |
| 12b | Reibpartner | 271a | Gehäuse |
| 13a | Reibpartner | 272 | Hohlrad |
| 13b | Reibpartner | 272a | Innenverzahnung |
| 14a | Betätigungsteil | 273 | Sonnenrad |
| 14b | Betätigungsteil | 273a | Außenverzahnung |
| 14c | Beaufschlagungselement | 274 | Saugsichel |
| 14d | Beaufschlagungselement | 274a | Segment |
| 15a | Anschlag | 275 | Volumenstrombegrenzungsventil |
| 15b | Anschlag | 276 | Ölkühler |
| 16a | Betätigungslager | Q | Volumenstrom |
| 16b | Betätigungslager | N | Drehzahl |
| 17 | Eingangsteil | 301 | Drehmomentübertragungseinrichtung |
| 17a | axialer Ansatz | 380 | Zweimassenschwungrad |
| 17b | Pilotlager | 380a | Eingangsteil |
| 17c | Dichtung | 380b | Ausgangsteil |
| 18 | Gehäuse | 382 | Masse |
| 19 | Bauteil | 383 | Masse |
| 20 | Scheibenteil | 401 | Drehmomentübertragungseinrichtung |
| 20a | Aufnahme | 501 | Drehmomentübertragungseinrichtung |
| 20b | Ansatz | 503 | Schöpfrohr |
| 30 | Kammer | 530 | Kammer |
| 50a | Betätigungsvorrichtung | 580 | Zweimassenschwungrad |
| 50b | Betätigungsvorrichtung | 580a | Ausgangsteil |
| 50c | Gehäuse | 580c | Eingangsteil |
| 50d | Ansatz | 580d | elastische Element |
| 50e | Lager | 580e | topfförmiges Bauteil |
| 50f | Dichtung | 580f | Aufnahmeteil |
| 51a | Nehmereinheit | 581 | Energiespeicher |
| 51 b | Nehmereinheit | 582 | Masse |
| 56 | Getriebegehäuse | 583 | Masse |
| 56a | Wandung | 584 | Reibeinrichtung |
| 80 | Zweimassenschwungrad | 586 | Aufnahme |
| 80a | Ausgangsteil | 588 | Ringteil |
| 80b | Steckverbindung | 589 | Reibbelag |
| 101 | Drehmomentübertragungseinrichtung | 589a | Bauteile |
| 114a | Einrücklager | 601 | Drehmomentübertragungseinrichtung |
| 116a | Betätigungsteil | 630 | Kammer |
| 150a | Betätigungsvorrichtung | 680 | Zweimassenschwungrad |
| 150b | Betätigungsvorrichtung | 680a | Ausgangsteil |
| 151 | Drehantrieb | 680c | Eingangsteil |
| 151a | Spindel | 681 | Energiespeicher |
| 152 | Getriebe | 682 | Masse |
| 153 | Nocke | 682a | Ansatz |
| 154 | profilierter Hebel | 683 | Masse |
| 180 | Zweimassenschwungrad | 750 | Betätigungsvorrichtung |
| 180a | Eingangsteil | 751 | Nehmereinheit |
| 180b | Ausgangsteil | 752 | Ringkolben |
| 181 | Energiespeicher | 752a | Kammer |
| 182 | Masse | 753 | Ringkolben |
| 183 | Masse | 753a | Kammer |
| | | 800 | Drehmomentübertragungseinrichtung |
| | | 801 | Drehschwingungsdämpfer |
| | | 802 | Abtriebswelle |
| | | 803 | Primärteil |
| | | 804 | Sekundärteil |
| | | 805 | Kupplungsscheibe |
| | | 806 | Reibungskupplung |
| | | 807 | drehelastischer Dämpfer |
| | | 808 | Federgruppen |
| | | 809 | Federgruppen |
| | | 810 | Blechteile |
| | | 811 | Kammer |
| | | 812 | axialer Ansatz |
| | | 813 | flanschartiges Bauteil |
| | | 814 | flanschartiges Bauteil |
| | | 815 | Reibungskupplung |
| | | 816 | Fliehgewichte |
| | | 817 | axialer Ansatz |
| | | 818 | Führungsbolzen |
| | | 819 | Federn |
| | | 820 | Reibbeläge |
| | | 821 | axialer Ansatz |
| | | 822 | Blechformteil |

## Patentansprüche

1. Drehmomentübertragungseinrichtung (1, 101, 201, 301, 401, 501, 601) für den Antriebsstrang eines Kraftfahrzeugs zur Übertragung von Drehmoment zwischen einer Brennkraftmaschine mit einer Kurbelwelle (4) und einem Doppelkupplungsgetriebe, mit zumindest zwei Getriebeeingangswellen (2, 3) mit zwei Reibungskupplungen (10,11), wobei
- je eine Getriebeeingangswelle (2, 3) mit der Kurbelwelle (4) mittels einer Reibungskupplung (10, 11) koppelbar ist;
- jede Reibungskupplung (10, 11) über antriebsseitige und abtriebsseitige Reibeinheiten (10a, 11a) verfügt, die mittels einer axialen Verpressung entlang einer Rotationsachse (2a) zumindest einer der Getriebeeingangswellen (2, 3) mit einander zur Bildung eines Reibeingriffs beaufschlagbar sind;
- die Reibeinheiten (10a, 11a) jeweils einer Reibungskupplung (10, 11) mittels eines der jeweiligen Reibeinheit zugeordneten Betätigungsteils (14a, 14b) entgegen eines Anschlags (15a, 15b) beaufschlagt werden;
- mit dem Betätigungsteil (14a, 14b) jeder Reibungskupplung (10, 11) unter Zwischenschaltung eines Betätigungslagers (16a, 16b) jeweils eine drehfest mit einem feststehenden Gehäuseteil (56) verbundene, axial auf das jeweilige Betätigungsteil (14a, 14b) einwirkende Betätigungsvorrichtung (50a, 50b, 150a) angeordnet ist;
- **dadurch gekennzeichnet, dass**:
- die Reibeinheiten (10a, 11a) aus einer Mehrzahl schichtweise in axialer Richtung antriebsseitig und abtriebsseitig abwechselnder Reibpartner (12a, 12b, 13a, 13b) gebildet sind; und
beide Reibungskupplungen (10, 11) in nasser Betriebsweise betrieben werden, wobei
zumindest eine Betätigungsvorrichtung eine elektrohydraulische Betätigungsvorrichtung (50a, 50b, 750) ist und
die zumindest eine Betätigungsvorrichtung (50a, 50b, 750) aus einer mittels eines Elektromotors betätigbaren hydraulischen Gebereinheit, bestehend aus einer Kolben-/Zylindereinheit, zumindest einer das entsprechende Betätigungs-lager (16a, 16b) axial beaufschlagenden hydraulischen Nehmereinheit (51a, 51b, 251a), bestehend aus einer Kolben-/Zylindereinheit, und einer Gebereinheit und Nehmereinheit verbindenden Druckmittelleitung gebildet ist.

2. Drehmomentübertragungseinrichtung (1, 201, 301, 401, 501, 601) nach Anspruch 1, **dadurch gekennzeichnet, dass** die Reibungskupplungen (10, 11) konzentrisch und radial übereinander angeordnet sind und das Eingangsteil (10b) der äußeren Reibungskupplung (10) und das Eingangsteils (11 b) der inneren Reibungskupplung (11) drehfest und axial miteinander verbunden sind.

3. Drehmomentübertragungseinrichtung (1, 201, 301, 401, 501, 601) nach einem oder Ansprüche 1 oder 2, **dadurch gekennzeichnet, dass** ein in dem Kraftfluss von der Brennkraftmaschine zum Eingangsteil (10b) vorgeschaltete Eingangsteil (17) einstückig mit dem Eingangsteil (10b) der äußeren Reibungskupplung (10) ausgebildet ist.

4. Drehmomentübertragungseinrichtung (1, 201, 301, 401, 501, 601) nach einem oder Ansprüche 1 bis 3, **dadurch gekennzeichnet, dass** die Betätigungsteile (14a, 14b) als Tellerfedern oder Hebel-Anordnungen ausgebildet sind.

5. Drehmomentübertragungseinrichtung (1, 201, 301, 401, 501, 601) nach Anspruch 1, **dadurch gekennzeichnet, dass** die zumindest eine Betätigungsvorrichtung (50a, 50b) mehrere, über den Umfang verteilte, um eine Getriebeeingangswelle (2, 3) angeordnete Nehmereinheiten (51a, 51b) zur Beaufschlagung eines Betäti-gungslagers (16a, 16b) aufweist.

6. Drehmomentübertragungseinrichtung (1, 201, 301, 401, 501, 601) nach Anspruch 5, **dadurch gekennzeichnet, dass** beide Betätigungsvorrichtungen (50a, 50b) über den Umfang verteilte Nehmereinheiten (51a, 51b) aufweisen und diese bezüglich ihrer Zuordnung zur Betätigungsvorrichtung über den Umfang abwechselnd verteilt und auf gleichem Umfang angeordnet sind.

7. Drehmomentübertragungseinrichtung nach Anspruch 1, **dadurch gekennzeichnet, dass** die zumindest eine Betätigungsvorrichtung (750) eine um eine Getriebeein-gangswelle angeordnete Nehmereinheit (751) mit einem Ringkolben (752, 753) zur Beaufschlagung eines Betätigungslagers (16a, 16b) aufweist.

8. Drehmomentübertragungseinrichtung (1, 201, 401) nach einem der vorgehenden Ansprüche, **dadurch gekennzeichnet, dass** ein Kühlmittelstrom zur Kühlung zumindest einer Reibungskupplung (10, 11) mittels einer Pumpe (270) bereitgestellt wird, die im Bereich einer der Kupplungsglocke zugewandten Wandung (56a) des Doppelkupplungsgetriebes angeordnet ist.

9. Drehmomentübertragungseinrichtung (1, 201, 401) nach Anspruch 8, **dadurch gekennzeichnet, dass** die Pumpe (270) ausschließlich für die Bereitstellung des Kühlmittelstroms verwendet wird.

10. Drehmomentübertragungseinrichtung (1, 201, 401) nach Anspruch 8 oder 9, **dadurch gekennzeichnet, dass** die Pumpe (270) von der Kurbelwelle (4) oder einem mit dieser verbundenen Bauteil (19) angetrieben wird.

11. Drehmomentübertragungseinrichtung (1, 201, 401) nach einem der Ansprüche 8 bis 10, **dadurch gekennzeichnet, dass** die Pumpe (270) eine Innenzahnradpumpe (271) mit einem Hohlrad (272) mit einer Innenverzahnung (272a) ist, mit der ein Sonnenrad (273) mit einer Außenverzahnung (273a) kämmt, wobei zum Ansaugen des Kühlmittels eine Saugsichel (274) vorgesehen ist und das Sonnenrad (273) mittels seiner Außenverzahnung (273a) an einem zu dieser komplementären Segment (274a) der Saugsichel (274) radial gelagert ist.

12. Drehmomentübertragungseinrichtung (1, 201, 401) nach Anspruch 11, **dadurch gekennzeichnet, dass** das Hohlrad (272) von einem Antriebsbauteil (20b) ange-trieben wird.

13. Drehmomentübertragungseinrichtung (201) nach einem der Ansprüche 8 bis 10, **dadurch gekennzeichnet, dass** die Pumpe (270) eine Gerotorpumpe ist.

14. Drehmomentübertragungseinrichtung (201) nach einem der Ansprüche 8 bis 13, **dadurch gekennzeichnet, dass** ein von der Pumpe (270) erzeugter Volumenstrom mittels einer Saugdrosselung (275) geregelt wird.

15. Drehmomentübertragungseinrichtung (201) nach Anspruch 14, dadurch gekenn-zeichnet, dass die Steuerung mittels eines Elektromagnetventils erfolgt.

16. Drehmomentübertragungseinrichtung (201) nach einem der Ansprüche 8 bis 15, **dadurch gekennzeichnet, dass** zwischen Pumpe (270) und den Reibeinheiten (10a, 11a) ein Ölkühler (276) geschaltet ist.

17. Drehmomentübertragungseinrichtung (201), nach einem der vorhergehenden Ansprüche, **dadurch gekennzeichnet, dass** in einer Kupplungsglocke (4b) zwischen einer Wandung (4a) der Brennkraftmaschine und einer Wandung (56a) des Dop-pelkupplungsgetriebes eine separate, gegen die Kupplungsglocke flüssigkeitsdicht abgedichtete Kammer (30, 530) gebildet ist, in der zumindest die beiden Reibungskupplungen (10, 11) aufgenommen sind.

18. Drehmomentübertragungseinrichtung (501) nach einem der Ansprüche 1 bis 17, **dadurch gekennzeichnet, dass** beide Reibungskupplungen (10, 11) von einem antriebsseitigen Bauteil (580c, 580e) radial umgriffen werden, das als Eingangs-teil für die beiden Reibungskupplungen (10, 11) vorgesehen ist.

19. Drehmomentübertragungseinrichtung nach Anspruch 18, dadurch gekennzeich-net, dass das Eingangsteil topfförmig ausgebildet ist und Teil eines Gehäuses zur Abdichtung der Kammer (530) gegenüber der Kupplungsglocke vorgesehen ist.

20. Drehmomentübertragungseinrichtung (1, 101, 201, 301, 401, 501, 601) nach einem der vorhergehenden Ansprüche, **dadurch gekennzeichnet, dass** zwischen Kurbelwelle (4) und Eingangsteil (17) der beiden Reibungskupplungen (10, 11) ein Zweimassenschwungrad (80, 180, 380, 580, 680) vorgesehen ist.

21. Drehmomentübertragungseinrichtung (501, 601) nach Anspruch 20, dadurch ge-kennzeichnet, dass das Zweimassenschwungrad (580, 680) in die Kammer (530, 630) integriert ist.

22. Drehmomentübertragungseinrichtung (1, 101, 201, 301, 401) nach Anspruch 20, **dadurch gekennzeichnet, dass** das Zweimassenschwungrad (80, 180, 380) außerhalb der Kammer (30) angeordnet ist.

23. Drehmomentübertragungseinrichtung (101, 401, 501) nach einem Ansprüche 21 oder 23, **dadurch gekennzeichnet, dass** zwei entgegen zumindest eines in Um-fangsrichtung wirksamen Energiespeichers (181, 481, 581) relativ verdrehbaren Massen (182, 183; 482, 483, 582, 583) zumindest vorübergehend miteinander koppelbar sind.

24. Drehmomentübertragungseinrichtung (101, 401, 501) nach Anspruch 23, **dadurch gekennzeichnet, dass** die Kopplung mittels einer fliehkraftabhängigen Reibeinrichtung (184, 584) erfolgt.

25. Drehmomentübertragungseinrichtung (101, 401, 501) nach Anspruch 23 oder 24, **dadurch gekennzeichnet, dass** eine erste, antriebsseitige koppelbare Masse ein Trägheitsmoment von 0,1 ± 0,04 kgm² und eine zweite antriebsseitige Masse ein Trägheitsmoment von 0,04 ± 0,04 kgm² aufweist.

26. Drehmomentübertragungseinrichtung (101, 401, 501) nach Anspruch 25, **dadurch gekennzeichnet, dass** die Kopplung der beiden Massen bis zu einem Bereich von 1200 bis 1800 Umdrehungen wirksam ist.

27. Doppelkupplungsgetriebe mit einer Drehmomentübertragungseinrichtung (1, 101, 201, 301, 401, 501, 601) entsprechend den Ansprüchen 1 bis 26.

28. Antriebsstrang mit einer Brennkraftmaschine und einem Doppelkupplungsgetrie-be mit einer zwischen diesen angeordneten Drehmomentübertragungseinrichtung (1, 101, 201, 301, 401, 501, 601) entsprechend den Ansprüchen 1 bis 26.

29. Verwendung einer Drehmomentübertragungseinrichtung (1, 101, 201, 301, 401, 501, 601) entsprechend den Ansprüchen 1 bis 26 für einen Antriebsstrang in einem Kraftfahrzeug.

## Claims

1. Torque transmission device (1, 101, 201, 301, 401, 501, 601) for the drive train of a motor vehicle for the transmission of torque between an internal combustion engine with a crankshaft (4) and a double clutch transmission, with at least two transmission input shafts (2, 3) with two friction clutches (10, 11),
- it being possible for in each case one transmission input shaft (2, 3) to be coupled to the crankshaft (4) by means of a friction clutch (10, 11);
- each friction clutch (10, 11) having drive-side and output-side friction units (10a, 11a) which can be loaded against one another by means of an axial pressure along a rotational axis (2a) of at least one of the transmission input shafts (2, 3) in order to form a frictional engagement;
- the friction units (10a, 11a) of in each case one friction clutch (10, 11) being loaded against a stop (15a, 15b) by means of an actuating part (14a, 14b) which is assigned to the respective friction unit;
- in each case one actuating apparatus (50a, 50b, 150a) which is connected in a rotationally fixed manner to a stationary housing part (56) and acts axially on the respective actuating part (14a, 14b) is arranged with the actuating part (14a, 14b) of each friction clutch (10, 11) with the interposition of an actuating bearing (16a, 16b);
**characterized in that**:
- the friction units (10a, 11a) are formed from a plurality of friction partners (12a, 12b, 13a, 13b) which alternate in a layered manner in the axial direction on the drive side and on the output side; and
- both friction clutches (10, 11) are operated using the wet method of operation,
at least one actuating apparatus being an electrohydraulic actuating apparatus (50a, 50b, 750), and the at least one actuating apparatus (50a, 50b, 750) being formed from a hydraulic master unit which can be actuated by means of an electric motor and comprises a piston/cylinder unit, at least one hydraulic slave unit (51a, 51b, 251a) which loads the corresponding actuating bearing (16a, 16b) axially and comprises a piston/cylinder unit, and a pressure-medium line which connects the master unit and slave unit.

2. Torque transmission device (1, 201, 301, 401, 501, 601) according to Claim 1, **characterized in that** the friction clutches (10, 11) are arranged concentrically and radially above one another, and the input part (10b) of the outer friction clutch (10) and the input part (11b) of the inner friction clutch (11) are connected axially to one another and fixedly so as to rotate with one another.

3. Torque transmission device (1, 201, 301, 401, 501, 601) according to either of Claims 1 and 2, **characterized in that** an input part (17) which is connected upstream in the force flow from the internal combustion engine to the input part (10b) is configured in one piece with the input part (10b) of the outer friction clutch (10).

4. Torque transmission device (1, 201, 301, 401, 501, 601) according to one of Claims 1 to 3, **characterized in that** the actuating parts (14a, 14b) are configured as disc springs or lever arrangements.

5. Torque transmission device (1, 201, 301, 401, 501, 601) according to Claim 1, **characterized in that** the at least one actuating apparatus (50a, 50b) has a plurality of slave units (51a, 51b) for loading an actuating bearing (16a, 16b) which are distributed over the circumference and are arranged around a transmission input shaft (2, 3).

6. Torque transmission device (1, 201, 301, 401, 501, 601) according to Claim 5, **characterized in that** both actuating apparatuses (50a, 50b) have slave units (51a, 51b) which are distributed over the circumference, and the said slave units (51a, 51b) are arranged on the same circumference and such that they are distributed alternately over the circumference with regard to their assignment to the actuating apparatus.

7. Torque transmission device according to Claim 1, **characterized in that** the at least one actuating apparatus (750) has a slave unit (751) which is arranged around a transmission input shaft and has an annular piston (752, 753) for loading an actuating bearing (16a, 16b).

8. Torque transmission device (1, 201, 401) according to one of the preceding claims, **characterized in that** a coolant flow for cooling at least one friction clutch (10, 11) is provided by means of a pump (270) which is arranged in the region of a wall (56a) of the double clutch transmission, which wall (56a) faces the clutch housing.

9. Torque transmission device (1, 201, 401) according to Claim 8, **characterized in that** the pump (270) is used exclusively for the provision of the coolant flow.

10. Torque transmission device (1, 201, 401) according to Claim 8 or 9, **characterized in that** the pump (270) is driven by the crankshaft (4) or a component (19) which is connected to the latter.

11. Torque transmission device (1, 201, 401) according to one of Claims 8 to 10, **characterized in that** the pump (270) is an internal-gear pump (271) with an internal gear (272) with an internal toothing system (272a), with which a sun gear (273) with an external toothing system (273a) meshes, a suction crescent (274) being provided in order to suck in the coolant and the sun gear (273) being mounted radially by means of its external toothing system (273a) on a segment (274a) of the suction crescent (274), which segment (274a) is complementary with respect to said external toothing system (273a).

12. Torque transmission device (1, 201, 401) according to Claim 11, **characterized in that** the internal gear (272) is driven by a drive component (20b).

13. Torque transmission device (201) according to one of Claims 8 to 10, **characterized in that** the pump (270) is a gerotor pump.

14. Torque transmission device (201) according to one of Claims 8 to 13, **characterized in that** a volumetric flow which is generated by the pump (270) is regulated by means of a suction throttling means (275).

15. Torque transmission device (201) according to Claim 14, **characterized in that** the control operation takes place by means of a solenoid valve.

16. Torque transmission device (201) according to one of Claims 8 to 15, **characterized in that** an oil cooler (276) is connected between the pump (270) and the friction units (10a, 11a).

17. Torque transmission device (201) according to one of the preceding claims, **characterized in that** a separate chamber (30, 530) which is sealed with respect to the clutch housing in a liquid-tight manner is formed in a clutch housing (4b) between a wall (4a) of the internal combustion engine and a wall (56a) of the double clutch transmission, in which chamber (30, 530) at least the two friction clutches (10, 11) are accommodated.

18. Torque transmission device (501) according to one of Claims 1 to 17, **characterized in that** both friction clutches (10, 11) are engaged around radially by a drive-side component (580c, 580e) which is provided as an input part for the two friction clutches (10, 11).

19. Torque transmission device according to Claim 18, **characterized in that** the input part is of cup-shaped configuration and is provided as a part of a housing for sealing the chamber (530) with respect to the clutch housing.

20. Torque transmission device (1, 101, 201, 301, 401, 501, 601) according to one of the preceding claims, **characterized in that** a two-mass flywheel (80, 180, 380, 580, 680) is provided between the crankshaft (4) and the input part (17) of the two friction clutches (10, 11).

21. Torque transmission device (501, 601) according to Claim 20, **characterized in that** the two-mass flywheel (580, 680) is integrated into the chambers (530, 630).

22. Torque transmission device (1, 101, 201, 301, 401) according to Claim 20, **characterized in that** the two-mass flywheel (80, 180, 380) is arranged outside the chamber (30).

23. Torque transmission device (101, 401, 501) according to either of Claims 21 and 23, **characterized in that** two masses (182, 183; 482, 483, 582, 583) which can be rotated relatively counter to at least one energy store (181, 481, 581) which acts in the circumferential direction can be coupled to one another at least temporarily.

24. Torque transmission device (101, 401, 501) according to Claim 23, **characterized in that** the coupling takes place by means of a friction device (184, 584) which is dependent on centrifugal force.

25. Torque transmission device (101, 401, 501) according to Claim 23 or 24, **characterized in that** a first, drive-side mass which can be coupled has a moment of inertia of 0.1 ± 0.04 kgm² and a second drive-side mass has a moment of inertia of 0.04 ± 0.04 kgm².

26. Torque transmission device (101, 401, 501) according to Claim 25, **characterized in that** the coupling of the two masses is active up to a range from 1200 to 1800 revolutions.

27. Double clutch transmission having a torque transmission device (1, 101, 201, 301, 401, 501, 601) in accordance with Claims 1 to 26.

28. Drive train having an internal combustion engine and a double clutch transmission with a torque transmission device (1, 101, 201, 301, 401, 501, 601) in accordance with Claims 1 to 26 which is arranged between them.

29. Use of a torque transmission device (1, 101, 201, 301, 401, 501, 601) in accordance with Claims 1 to 26 for a drive train in a motor vehicle.

## Revendications

1. Dispositif de transmission de couple (1, 101, 201, 301, 401, 501, 601) pour la chaîne cinématique d'un véhicule automobile pour la transmission d'un couple entre un moteur à combustion interne avec un vilebrequin (4) et une boîte de vitesses à double embrayage, comprenant au moins deux arbres d'entrée de boîte de vitesses (2, 3) avec deux embrayages à friction (10, 11),
- un arbre d'entrée de boîte de vitesses (2, 3) pouvant à chaque fois être accouplé au vilebrequin (4) au moyen d'un embrayage à friction (10, 11) ;
- chaque embrayage à friction (10, 11) disposant d'unités de friction côté entraînement et côté prise de force (10a, 11a), qui peuvent être sollicitées au moyen d'une pression axiale le long d'un axe de rotation (2a) d'au moins l'un des arbres d'entrée de boîte de vitesses (2, 3) l'un avec l'autre afin de former un engagement par friction ;
- les unités de friction (10a, 11a) d'un embrayage à friction respectif (10, 11) étant sollicitées à l'encontre d'une butée (15a, 15b) au moyen d'une partie d'actionnement (14a, 14b) associée à l'unité de friction respective ;
- un dispositif d'actionnement respectif (50a, 50b, 150a) agissant axialement sur la partie d'actionnement respective (14a, 14b) et connecté de manière solidaire en rotation à une partie de boîtier fixe (56) étant disposé avec la partie d'actionnement (14a, 14b) de chaque embrayage à friction (10, 11) en interposant un palier d'actionnement (16a, 16b) ;
**caractérisé en ce que** :
- les unités de friction (10a, 11a) sont formées d'une pluralité de partenaires de friction (12a, 12b, 13a, 13b) alternant par couches dans la direction axiale côté entraînement et côté prise de force ; et
- les deux embrayages à friction (10, 11) sont utilisés en mode de fonctionnement humide,
au moins un dispositif d'actionnement étant un dispositif d'actionnement électro-hydraulique (50a, 50b, 750), et
l'au moins un dispositif d'actionnement (50a, 50b, 750) étant formé d'une unité hydraulique émettrice pouvant être actionnée au moyen d'un moteur électrique, constituée d'une unité cylindre/piston, d'au moins une unité hydraulique réceptrice (51a, 51b, 251a) sollicitant axialement le palier d'actionnement correspondant (16a, 16b), constituée d'une unité cylindre/piston, et d'une conduite de fluide sous pression reliant l'unité émettrice et l'unité réceptrice.

2. Dispositif de transmission de couple (1, 101, 201, 301, 401, 501, 601) selon la revendication 1, **caractérisé en ce que** les embrayages à friction (10, 11) sont disposés concentriquement et radialement l'un au-dessus de l'autre et la partie d'entrée (10b) de l'embrayage à friction extérieur (10) et la partie d'entrée (11b) de l'embrayage à friction intérieur (11) étant connectées l'une à l'autre de manière solidaire en rotation et axialement.

3. Dispositif de transmission de couple (1, 101, 201, 301, 401, 501, 601) selon l'une quelconque des revendications 1 ou 2, **caractérisé en ce qu'**une partie d'entrée (17) montée en amont dans le flux de forces allant du moteur à combustion interne à la partie d'entrée (10b) est réalisée d'une seule pièce avec la partie d'entrée (10b) de l'embrayage à friction extérieur (10).

4. Dispositif de transmission de couple (1, 101, 201, 301, 401, 501, 601) selon l'une quelconque des revendications 1 à 3, **caractérisé en ce que** les parties d'actionnement (14a, 14b) sont réalisées sous forme de ressorts Belleville ou d'agencements de leviers.

5. Dispositif de transmission de couple (1, 101, 201, 301, 401, 501, 601) selon la revendication 1, **caractérisé en ce que** l'au moins un dispositif d'actionnement (50a, 50b) présente plusieurs unités réceptrices (51a, 51b) réparties sur la périphérie, disposées autour d'un arbre d'entrée de boîte de vitesses (2, 3), pour solliciter un palier d'actionnement (16a, 16b).

6. Dispositif de transmission de couple (1, 101, 201, 301, 401, 501, 601) selon la revendication 5, **caractérisé en ce que** les deux dispositifs d'actionnement (50a, 50b) présentent des unités réceptrices (51a, 51b) réparties sur la périphérie et celles-ci sont réparties en alternance sur la périphérie en fonction de leur affectation au dispositif d'actionnement et sont disposées sur la même périphérie.

7. Dispositif de transmission de couple selon la revendication 1, **caractérisé en ce que** l'au moins un dispositif d'actionnement (750) présente une unité réceptrice (751) disposée autour d'un arbre d'entrée de boîte de vitesses, avec un piston annulaire (752, 753) pour solliciter un palier d'actionnement (16a, 16b).

8. Dispositif de transmission de couple (1, 201, 401) selon l'une quelconque des revendications précédentes, **caractérisé en ce qu'**un flux de réfrigérant pour le refroidissement d'au moins un embrayage à friction (10, 11) est fourni au moyen d'une pompe (270) qui est disposée dans la région d'une paroi (56a) de la boîte de vitesses à double embrayage tournée vers la cloche d'embrayage.

9. Dispositif de transmission de couple (1, 201, 401) selon la revendication 8, **caractérisé en ce que** la pompe (270) est utilisée exclusivement pour fournir le flux de réfrigérant.

10. Dispositif de transmission de couple (1, 201, 401) selon la revendication 8 ou 9, **caractérisé en ce que** la pompe (270) est entraînée par le vilebrequin (4) ou par un composant (19) relié à celui-ci.

11. Dispositif de transmission de couple (1, 201, 401) selon l'une quelconque des revendications 8 à 10, **caractérisé en ce que** la pompe (270) est une pompe à engrenages internes (271) avec une couronne dentée (272) avec une denture interne (272a), avec laquelle s'engrène une roue solaire (273) avec une denture extérieure (273a), un croissant d'aspiration (274) pour l'aspiration du réfrigérant étant prévu et la roue solaire (273) étant supportée radialement au moyen de sa denture extérieure (273a) sur un segment (274a) complémentaire à celle-ci du croissant d'aspiration (274).

12. Dispositif de transmission de couple (1, 201, 401) selon la revendication 11, **caractérisé en ce que** la couronne dentée (272) est entraînée par un composant d'entraînement (20b).

13. Dispositif de transmission de couple (201) selon l'une quelconque des revendications 8 à 10, **caractérisé en ce que** la pompe (270) est une pompe Gerotor.

14. Dispositif de transmission de couple (201) selon l'une quelconque des revendications 8 à 13, **caractérisé en ce qu'**un débit volumique produit par la pompe (270) est régulé au moyen d'un étranglement d'aspiration (275).

15. Dispositif de transmission de couple (201) selon la revendication 14, **caractérisé en ce que** la commande a lieu au moyen d'une électrovanne.

16. Dispositif de transmission de couple (201) selon l'une quelconque des revendications 8 à 15, **caractérisé en ce qu'**entre la pompe (270) et les unités de friction (10a, 11a) est monté un refroidisseur d'huile (276).

17. Dispositif de transmission de couple (201) selon l'une quelconque des revendications précédentes, **caractérisé en ce que** dans une cloche d'embrayage (4b) entre une paroi (4a) du moteur à combustion interne et une paroi (56a) de la boîte de vitesses à double embrayage est formée une chambre séparée (30, 530) scellée de manière étanche aux fluides vis-à-vis de la cloche d'embrayage, dans laquelle chambre sont reçus au moins les deux embrayages à friction (10, 11).

18. Dispositif de transmission de couple (501) selon l'une quelconque des revendications 1 à 17, **caractérisé en ce que** les deux embrayages à friction (10, 11) sont saisis radialement sur leur pourtour par un composant côté entraînement (580c, 580e), lequel est prévu en tant que partie d'entrée pour les deux embrayages à friction (10, 11).

19. Dispositif de transmission de couple selon la revendication 18, **caractérisé en ce que** la partie d'entrée est réalisée sous forme de pot et est prévue en tant que partie d'un boîtier pour réaliser l'étanchéité de la chambre (530) par rapport à la cloche d'embrayage.

20. Dispositif de transmission de couple (1, 101, 201, 301, 401, 501, 601) selon l'une quelconque des revendications précédentes, **caractérisé en ce qu'**entre le vilebrequin (4) et la partie d'entrée (17) des deux embrayages à friction (10, 11) est prévu un volant d'inertie à deux masses (80, 180, 380, 580, 680).

21. Dispositif de transmission de couple (501, 601) selon la revendication 20, **caractérisé en ce que** le volant d'inertie à deux masses (580, 680) est intégré dans la chambre (530, 630).

22. Dispositif de transmission de couple (1, 101, 201, 301, 401) selon la revendication 20, **caractérisé en ce que** le volant d'inertie à deux masses (80, 180, 380) est disposé en dehors de la chambre (30).

23. Dispositif de transmission de couple (101, 401, 501) selon l'une quelconque des revendications 21 ou 23, **caractérisé en ce que** deux masses (182, 183 ; 482, 483, 582, 583), pouvant tourner relativement à l'encontre d'au moins un accumulateur d'énergie (181, 481, 581) agissant dans la direction périphérique, peuvent être accouplées au moins temporairement l'une avec l'autre.

24. Dispositif de transmission de couple (101, 401, 501) selon la revendication 23, **caractérisé en ce que** l'accouplement a lieu au moyen d'un dispositif de friction dépendant de la force centrifuge (184, 584).

25. Dispositif de transmission de couple (101, 401, 501) selon la revendication 23 ou 24, **caractérisé en ce qu'**une première masse pouvant être accouplée côté entraînement présente un couple d'inertie de 0,1 ± 0,04 kgm² et une deuxième masse côté entraînement présente un couple d'inertie de 0,04 ± 0,04 kgm².

26. Dispositif de transmission de couple (101, 401, 501) selon la revendication 25, **caractérisé en ce que** l'accouplement des deux masses est efficace jusqu'à une plage de 1200 à 1800 rotations.

27. Boîte de vitesses à double embrayage comprenant un dispositif de transmission de couple (1, 101, 201, 301, 401, 501, 601) selon les revendications 1 à 26.

28. Chaîne cinématique comprenant un moteur à combustion interne et une boîte de vitesses à double embrayage avec un dispositif de transmission de couple (1, 101, 201, 301, 401, 501, 601) selon les revendications 1 à 26 disposé entre ceux-ci.

29. Utilisation d'un dispositif de transmission de couple (1, 101, 201, 301, 401, 501, 601) selon les revendications 1 à 26 pour une chaîne cinématique dans un véhicule automobile.
